# EUROPÄISCHE PATENTSCHRIFT

(11) **EP 3 593 086 B1**
(45) Veröffentlichungstag und Bekanntmachung des Hinweises auf die Patenterteilung: **17.02.2021**
(21) Anmeldenummer: 18733811.6
(22) Anmeldetag: 13.06.2018
(51) Int. Cl.: G01B 11/26, B21D 5/00, G01B 21/04

(54) **VORRICHTUNG UND VERFAHREN ZUM BESTIMMEN EINES WINKELS ZWISCHEN ZWEI WERKSTÜCKFLÄCHEN**
DEVICE AND METHOD FOR DETERMINING AN ANGLE BETWEEN TWO WORKPIECE SURFACES
DISPOSITIF ET PROCÉDÉ DE DÉTERMINATION D'UN ANGLE ENTRE DEUX SURFACES DE PIÈCE

(30) Priorität: 19.06.2017 DE 102017113419
(43) Veröffentlichungstag der Anmeldung: 15.01.2020
(73) Patentinhaber: KEBA AG, 4041 Linz (AT)
(72) Erfinder: PREISINGER, Gernot, 4030 Linz (AT)
(74) Vertreter: Horn Kleimann Waitzhofer Patentanwälte PartG mbB
(86) Internationale Anmeldenummer: PCT/EP2018/065736
(87) Internationale Veröffentlichungsnummer: WO 2018/234128

(56) Entgegenhaltungen:
- EP-A1- 3 155 366
- WO-A1-2015/196230
- DE-U1-202010 006 391

## Beschreibung

Die vorliegende Erfindung betrifft eine Vorrichtung und ein Verfahren zum Bestimmen, insbesondere zum berührungslosen Bestimmen, eines Winkels zwischen zwei Werkstückflächen, wie beispielsweise eines Innenwinkels eines an einer Blechbiegemaschine gebogenen Blechs.

Aus der JP2002059217A ist eine Vorrichtung zur optischen Vermessung eines Winkels zwischen zwei Oberflächen, wie beispielsweise zwei Werkstückflächen, bekannt, bei welcher ein von einem Lasersender erzeugter Laserstrahl von einem rotierenden Spiegel in einer Ebene senkrecht zu den beiden Oberflächen aufgefächert wird, so dass der umlaufende Laserstrahl die Oberflächen überstreicht. Von den Oberflächen in Richtung des rotierenden Spiegels reflektiertes Licht wird von dem rotierenden Spiegel über einen halbdurchlässigen Spiegel zu einem lichtempfindlichen Sensor gelenkt, der ein elektrisches Signal in Abhängigkeit der einfallenden Lichtmenge generiert. Die auf den lichtempfindlichen Sensor gelenkte Lichtmenge variiert mit der Winkelstellung des Spiegels und erreicht in ihrem Verlauf jeweils lokale Intensitätsmaxima, wenn der Laserstrahl im Wesentlichen senkrecht auf eine der beiden Oberflächen gerichtet ist. Anhand der Drehstellungen des rotierenden Spiegels, bei denen die lokalen Intensitätsmaxima des reflektierten Lichts auftreten, kann der Innenwinkel zwischen den Oberflächen bestimmt werden.

Aus der WO2015/196230A1 ist eine Vorrichtung zur berührungslosen Winkelbestimmung bekannt, bei welcher als Lasersender eine Halbleiter-Laserdiode und als lichtempfindlicher Sensor eine in die Halbleiter-Laserdiode integrierte Monitordiode benutzt wird. Die Monitordiode ist zur Leistungsregelung des Lasersenders vorgesehen, spricht aber auch auf einfallendes Laserlicht an und kann daher zum Erfassen des von den Oberflächen reflektierten Lichts am Ort des Lasersenders benutzt werden, ohne dass ein halbdurchlässiger Spiegel benötigt wird. Die Halbleiterdiode ist kompakt und kann direkt auf der Rotationsachse des rotierenden Spiegels angeordnet werden. Zum Drehen des Spiegels wird ein Miniatur-Synchronmotor benutzt. So erzielt die Vorrichtung aus der WO2015/196230A1 eine kompakte Bauform und eignet sich als HandWinkelmessgerät.

Jedoch eignet sich die Vorrichtung aus der WO2015/196230A1 aufgrund von nur mit hohem Aufwand zu vermeidender Toleranzen bei der Fertigung und Ausrichtung ihrer miniaturisierten Bauteile sowie aufgrund des typischen inneren Aufbaus herkömmlicher Laserdioden nicht optimal für Anwendungen wie beispielsweise die Werkstückkontrolle an Blechbiegemaschinen, wo Messgenauigkeiten in der Größenordnung von 0,3° bis 0,1° oder genauer angestrebt werden.

Aus der DE 20 2010 006 391 U1 ist eine Biegemaschine zum Biegen von Werkstücken, insbesondere Blechen, mit einem auf einer Basis angeordneten Werkzeug aus einem oberen Werkzeugteil und einem unteren Werkzeugteil und mit mindestens einem, in seitlichem Abstand zum Werkzeug angeordneten, optischen, vorzugsweise lasergestützten Biegewinkel-Messgerät bekannt. Der seitliche Abstand des Biegewinkel-Messgeräts vom Werkzeug ist veränderbar, und das Biegewinkel-Messgerät wird von einem Tragarm gehalten, der das Biegewinkel-Messgerät mit der Basis verbindet. Der Tragarm ist zur seitlichen Abstandsänderung zwischen Biegewinkel-Messgerät und Werkzeug in Bezug auf das Werkzeug beweglich ausgebildet. Für jede Matrizenbreite, also für jedes verwendete Werkzeug, wird eine eigene Kalibrierkurve benötigt, welche eine Zuordnung des Winkels eines erfassten Laserstrichs zum Ist-Winkel im Blech bereitstellt. Die Kalibrierung erfolgt dabei über ein externes Kalibriergerät.

Vor diesem Hintergrund liegt der vorliegenden Erfindung als Aufgabe zu Grunde, die Messgenauigkeit bei der Bestimmung eines Winkels zwischen zwei Werkstückflächen zu verbessern, insbesondere wenn die Bestimmung mit einer Vorrichtung mit kompakter Bauform erfolgt.

Gemäß einem ersten Aspekt und Anspruch 1 wird eine Vorrichtung zum Bestimmen eines Winkels zwischen zwei Werkstückflächen vorgeschlagen, die im Weiteren auch als Winkelmessvorrichtung bezeichnet wird und aufweist: einen Sender zum Erzeugen eines Lichtstrahls; einen kontinuierlich umlaufenden Richtrotor zum Abstrahlen des erzeugten Lichtstrahls in einer umlaufenden, zu einer Rotationsachse des Richtrotors senkrechten Abstrahlrichtung als abgestrahlter Lichtstrahl; einen Empfänger zum Empfangen eines reflektierten Lichtstrahls, wenn die Rotationsachse des Richtrotors achsparallel zu einer Scheitelachse des Winkels angeordnet ist und der abgestrahlte Lichtstrahl von einer der zwei Werkstückflächen antiparallel zu der Abstrahlrichtung reflektiert wird; eine Abstrahlwinkelgebereinheit zum Ermitteln jeweiliger Abstrahlwinkel des von dem Richtrotor abgestrahlten Lichtstrahls, bei denen der Empfänger den reflektierten Lichtstrahl empfängt; eine Kalibriereinheit zum Bestimmen mindestens von Kalibrierparametern; eine Speichereinheit zum Speichern der Kalibrierparameter und eines Fehlermodells, wobei die Kalibrierparameter Koeffizienten einer mathematischen Funktion des Fehlermodells sind, das Fehlermodell einen winkelabhängigen Fehler des von der Abstrahlwinkelgebereinheit ermittelten Abstrahlwinkels beschreibt und der winkelabhängige Fehler eine vorrichtungsspezifische Fehlerursache aufweist; und eine Auswerteeinheit, die dazu eingerichtet ist, den Winkel als Funktion der ermittelten Abstrahlwinkel des von dem Richtrotor abgestrahlten Lichtstrahls, der gespeicherten Kalibrierparameter und des gespeicherten Fehlermodells zu bestimmen.

Eine jeweilige Werkstückfläche kann eine ebene Fläche eines jeweiligen beliebigen Objekts umfassen. Die Winkelmessvorrichtung ist insbesondere zum berührungslosen Bestimmen des Winkels zwischen den Werkstückflächen eingerichtet. Der Sender ist beispielsweise ein Lasersender oder eine LED-Lichtquelle. Der Sender kann insbesondere eine Halbleiterdiode umfassen. Die Winkelmessvorrichtung kann weiterhin eine Kollimationsoptik aufweisen zum Bündeln von Licht, das von der Halbleiterdiode erzeugt wird, zu einem erzeugten Lichtstrahl, der sich entlang einer Ausbreitungsrichtung ausbreitet. Der erzeugte Lichtstrahl ist beispielsweise ein Laserstrahl oder ein Lichtstrahl einer LED-Lichtquelle. Der Empfänger kann ein lichtempfindlicher Sensor sein, der dazu eingerichtet ist, ein beispielsweise elektrisches Signal zu erzeugen, welches eine empfangene Lichtintensität angibt.

Der kontinuierlich umlaufende Richtrotor kann über eine Welle von einem Motor, wie einem Miniatur-Synchronmotor, angetrieben werden. Der Richtrotor kann beispielsweise dadurch zum Abstrahlen des erzeugten Lichtstrahls in einer umlaufenden, zu der Rotationsachse des Richtrotors senkrechten Abstrahlrichtung eingerichtet sein, dass der Sender an dem Richtrotor fixiert ist und gemeinsam mit dem Richtrotor um die Rotationsachse des Richtrotors umläuft.

Die Rotationsachse des Richtrotors kann beispielsweise dadurch achsparallel zu einer Scheitelachse des Winkels angeordnet sein, dass ein Bediener die Winkelmessvorrichtung in Vorbereitung des Messvorgangs zwischen die zwei Werkstückflächen hält. Der Begriff "achsparallel" ist somit insbesondere so zu verstehen, dass auch eine im Wesentlichen achsparallele Anordnung der Rotationsachse des Richtrotors zu einer Scheitelachse des Winkels umfasst ist, wie sie mit einem Handwinkelmessgerät zu erreichen ist.

Gleichfalls bezeichnet der Betriff "antiparallel" insbesondere eine im Wesentlichen zu der Abstrahlrichtung antiparallele bzw. im Wesentlichen mit dieser koaxiale Richtung. Der Empfänger kann den antiparallel zu der Abstrahlrichtung reflektierten Lichtstrahl beispielsweise dadurch empfangen, dass er in einem Ausbreitungsweg des reflektierten Lichtstrahls angeordnet ist, oder es kann ein halbdurchlässiger Spiegel im Ausbreitungsweg des reflektierten Lichtstrahls vorgesehen sein, um mindestens einen Teil des reflektierten Lichtstrahls zu dem Empfänger zu lenken.

Es versteht sich, dass je nach Oberflächenbeschaffenheit einer jeweiligen Werkstückfläche der abgestrahlte Lichtstrahl, wenn er von der Werkstückfläche reflektiert wird, unter Umständen diffus reflektiert und/oder aufgefächert werden kann. Unter dem reflektierten Lichtstrahl kann hierbei derjenige Anteil des an der Werkstückfläche reflektierten Licht verstanden werden, der sich im Wesentlichen antiparallel zur Abstrahlrichtung zurück in Richtung Richtrotor ausbreitet.

Unter einem Abstrahlwinkel des abgestrahlten Lichtstrahls ist insbesondere der Winkel der augenblicklichen Abstrahlrichtung des abgestrahlten Lichtstrahls gegenüber einer vorgegebenen Referenzrichtung in einer Ebene zu verstehen, in die der erzeugte Lichtstrahl von dem kontinuierlich umlaufenden Richtrotor aufgefächert wird.

Die Abstrahlwinkelgebereinheit kann beispielsweise dazu eingerichtet sein, die jeweiligen Abstrahlwinkel, bei denen der Empfänger den achsparallel zu der Abstrahlrichtung reflektierten Lichtstrahl empfängt, zu ermitteln durch: Bestimmen der maximalen Intensität des von dem Empfänger ausgegebenen Signals, Bestimmen der zugehörigen Drehstellung des Richtrotors durch Auslesen eines mit der Rotationsachse des Richtrotors oder mit der Achse des den Richtrotor antreibenden Motors gekoppelten Winkelgebers und Ermitteln des Abstrahlwinkels des von dem Richtrotor abgestrahlten Lichtstrahls als Funktion der ermittelten Drehstellung des Richtrotors. Die Funktion kann beispielsweise eine Multiplikation mit zwei oder eins sein.

Die Kalibriereinheit ist insbesondere dazu eingerichtet, die Kalibrierparameter zu bestimmen, wenn ein Kalibriervorgang mit der Winkelmessvorrichtung durchgeführt wird. Die Kalibriereinheit kann die Kalibrierparameter vollautomatisch oder durch Interaktion mit einem Bediener bestimmen.

Die Kalibrierparameter sind Koeffizienten einer mathematischen Funktion eines Fehlermodells, die einen winkelabhängigen Fehler des von der Abstrahlwinkelgebereinheit ermittelten Abstrahlwinkels exakt oder näherungsweise beschreibt. Das Fehlermodell ist vorab in der Speichereinheit gespeichert.

Als Fehler des ermittelten Abstrahlwinkels ist insbesondere derjenige Betrag zu verstehen, um den der ermittelte Abstrahlwinkel zu korrigieren ist, damit von der Winkelmessvorrichtung der tatsächliche Winkel zwischen den Werkstückflächen exakt bestimmt wird. Der Fehler kann somit als Abweichung zwischen einem ermittelten Abstrahlwinkel, bei dem der reflektierte Lichtstrahl von dem Empfänger empfangen wird, und einem korrekten Abstrahlwinkel, bei dem der abgestrahlte Lichtstrahl antiparallel zu der Abstrahlrichtung reflektiert wird bzw. würde, wenn die Winkelmessvorrichtung frei von Fertigungs- und Justierungstoleranzen wäre. Ursachen für den Fehler können beispielsweise eine ungleichmäßige Rotationsgeschwindigkeit des Richtrotors, eine ungenaue Ausrichtung der Rotationsachse des Richtrotors und der Ausbreitungsrichtung des erzeugten Lichtstrahls oder eine ungenauen Positionierung des Empfängers sein und werden als vorrichtungsspezifische Fehlerursachen bezeichnet.

Die Auswerteeinheit kann insbesondere eingerichtet sein, den Winkel zwischen den Werkstückflächen durch Bilden einer Differenz zwischen 180° und der Differenz aus zwei korrigierten Abstrahlwinkeln des von dem Richtrotor abgestrahlten Lichtstrahls zu bestimmen. Bei den zwei korrigierten Abstrahlwinkeln des von dem Richtrotor abgestrahlten Lichtstrahls handelt es sich insbesondere um die Ergebnisse einer anhand des Fehlermodells und der Kalibrierparameter vorgenommenen Korrektur der zwei ermittelten Abstrahlwinkel des von dem Richtrotor abgestrahlten Lichtstrahls, bei denen der Empfänger den von einer der zwei Werkstückflächen reflektierten Lichtstrahl empfangen hat.

Die vorrichtungsspezifischen Fehlerursachen können somit vorteilhafterweise mit dem Fehlermodell modelliert werden. Die Winkelmessvorrichtung kann durch Bestimmen der Kalibierparameter für das Fehlermodell kalibriert werden und die Fehler können mindestens näherungsweise korrigiert werden. Somit kann die Messgenauigkeit der Winkelmessvorrichtung verbessert werden.

Durch Korrigieren der vorrichtungsspezifischen Fehlerursachen anhand des Fehlermodells kann zudem vorteilhafterweise auf ein zeitaufwändiges mechanisches Justieren der Komponenten der Winkelmessvorrichtung zur Minimierung des Fehlers verzichtet werden. Die Winkelmessvorrichtung kann vorteilhafterweise gänzlich ohne mechanische Justiermöglichkeit ausgestaltet werden. So wird vermieden, dass sich eine Justierung der Winkelmessvorrichtung mit der Zeit verschlechtert, und die Messgenauigkeit der Winkelmessvorrichtung kann vorteilhafterweise weiter verbessert werden. Zudem können durch Weglassen der Justiermöglichkeit die Herstellungskosten der Winkelmessvorrichtung gesenkt werden. Weiterhin ermöglicht das Weglassen der Justiermöglichkeit die weitere Miniaturisierung des Messsystems und damit dessen Integration in ein kompaktes Handmessgerät.

Die Auswerteeinheit kann ferner dazu eingerichtet sein, ein Signal, das den bestimmten Winkel anzeigt, an eine externe Einrichtung auszugeben und/oder den bestimmten Winkel auf einer Anzeigeeinheit anzuzeigen.

Gemäß einer Ausführungsform bildet der Richtrotor eine ebene Reflexionsfläche für den von dem Sender erzeugten Lichtstrahl.

In einer Variante kann die ebene Reflexionsfläche derart angeordnet sein, dass die Reflexionsfläche parallel zur Richtung der Rotationsachse des Richtrotors verläuft, wobei die Rotationsachse des Richtrotors orthogonal oder im Wesentlichen orthogonal zu der Ausbreitungsrichtung des erzeugten Lichtstrahls ist. In der Variante kann die Abstrahlwinkelgebereinheit dazu eingerichtet sein, den Abstrahlwinkel als das Doppelte der Drehstellung des Richtrotors zu bestimmen.

In einer weiteren Variante kann die ebene Reflexionsfläche derart angeordnet sein, dass die Reflexionsfläche schräg zu der Rotationsachse des Richtrotors verläuft, insbesondere um 45 Grad zur Rotationsachse geneigt ist, wobei die Rotationsachse des Richtrotors im Wesentlichen achsgleich mit der Ausbreitungsrichtung des erzeugten Laserlichts ist. In der Variante kann die Abstrahlwinkelgebereinheit dazu eingerichtet sein, den Abstrahlwinkel als die Drehstellung des Richtrotors zu bestimmen.

Die ebene Reflexionsfläche des Richtrotors kann den von dem Sender erzeugten Lichtstrahl in die zu der Rotationsachse des Richtrotors senkrechte Abstrahlrichtung reflektieren und kann den von einer der Werkstückflächen im Wesentlichen antiparallel zu der Abstrahlrichtung reflektierten Lichtstrahl zu dem Empfänger reflektieren.

Somit ist es vorteilhafterweise nicht erforderlich, dass der Sender, die ggf. vorgesehene Kollimationsoptik und der Empfänger mit dem Richtrotor umlaufen. Dadurch wird es einfacher, das Signal des Empfängers zu Einheiten, wie der Kalibriereinheit und der Auswerteeinheit, zu übertragen. Die Winkelmessvorrichtung kann somit eine kompakte und robuste Bauform aufweisen, bei welcher das einzige bewegliche Bauteil oder mindestens das einzige umlaufende Bauteil der umlaufende Richtrotor mit der ebenen Reflexionsfläche ist.

Gemäß einer weiteren Ausführungsform weist der Sender eine Monitordiode auf, und die Monitordiode bildet den Empfänger.

Der Sender gemäß der vorliegenden Ausführungsform ist insbesondere eine Halbleiterdiode, wie eine Laserdiode. Die Monitordiode ist insbesondere in der Laserdiode derart angeordnet, dass sie mindestens einen Teil des von einem Laserchip der Laserdiode erzeugten Laserlichts erfasst, und kann ein beispielsweise elektrisches Signal liefern, welches die Intensität des von ihr erfassten Laserlichts angibt. Die Monitordiode kann somit zur Leistungsregelung der Laserdiode verwendet werden. Wenn der reflektierte Lichtstrahl auf die Laserdiode trifft, kann die Monitordiode ein elektrisches Signal liefern, welches die kombinierte Intensität des erzeugten Laserlichts und des reflektierten Lichtstrahls angibt. Somit kann die Monitordiode des Senders als der Empfänger benutzt werden. Dadurch kann vorteilhafterweise auf einen separaten Sensor für den Empfänger sowie auf einen halbdurchlässigen Spiegel zum Ablenken eines Teils des reflektierten Lichtstrahls zu dem separaten Sensor verzichtet werden. Weiterhin lässt sich aufgrund der kompakten Bauform der Halbleiterdiode der Sender vorteilhafterweise unter Verzicht auf einen feststehenden Ablenkspiegel direkt in Richtung der Rotationsachse des Richtrotors mit der Reflexionsfläche ausrichten. Somit ermöglicht die Laserdiode mit der Monitordiode eine kompakte Bauform der Winkelmessvorrichtung mit einer reduzierten Anzahl von Bauteilen.

Gemäß einer weiteren Ausführungsform weist die Winkelmessvorrichtung einen Zeitgeber auf, der dazu eingerichtet ist, ein getaktetes Zeitsignal an die Abstrahlwinkelgebereinheit auszugeben.

Der Zeitgeber kann beispielsweise ein Quarz- oder RC-Oszillator sein. Die Abstrahlwinkelgebereinheit der Winkelmessvorrichtung gemäß der vorliegenden Ausführungsform kann dazu eingerichtet sein, unter Verwendung des getakteten Zeitsignals die Zeitpunkte zu bestimmen, zu denen der Empfänger den reflektierten Lichtstrahl empfängt, und durch Vergleich der Zeitpunkte mit einer Umlaufdauer des abgestrahlten Lichtstrahls und der vorgegebenen Referenzrichtung die jeweiligen Abstrahlwinkel des von dem Richtrotor abgestrahlten Lichtstrahls zu den jeweiligen Zeitpunkten zu ermitteln.

Die Abstrahlwinkelgebereinheit kann dazu eingerichtet sein, die vorgegebene Referenzrichtung anhand eines Referenzsignals zu bestimmen und die Umlaufdauer als die Zeitdauer zwischen dem zweimaligen Auftreten des Referenzsignals zu bestimmen.

Das Referenzsignal kann beispielsweise von dem Empfänger erzeugt werden, wenn der umlaufende Richtrotor den erzeugten Lichtstrahl direkt, d.h. ohne dass dieser zuvor zu einer der Werkstückflächen läuft, antiparallel zur Ausbreitungsrichtung des erzeugten Lichtstrahls zu dem Empfänger abstrahlt.

Somit kann bei der Winkelmessvorrichtung gemäß der vorliegenden Ausführungsform auf einen separaten Winkelgeber für die Drehstellung des Richtrotors vorteilhafterweise verzichtet werden. Dadurch sind eine kompaktere Bauform und eine Senkung der Herstellungskosten der Winkelmessvorrichtung möglich.

Gemäß einer weiteren Ausführungsform weist die Winkelmessvorrichtung einen Referenzsignalgeber auf, dazu eingerichtet ist, ein Referenzsignal an die Abstrahlwinkelgebereinheit auszugeben, wenn der abgestrahlte Lichtstrahl von dem Richtrotor in einer Referenzrichtung abgestrahlt wird.

Die Referenzrichtung ist die vorgegebene Referenzrichtung. Der Abstrahlwinkel kann als 0 Grad definiert sein, wenn die Abstrahlrichtung die Referenzrichtung ist. Bei dem Referenzsignalgeber kann es sich beispielsweise um eine Photodiode handeln, die derart angeordnet ist, dass sie während eines Umlaufs des Richtrotors genau einmal von dem von dem Richtrotor abgestrahlten Lichtstrahl überstrichen wird.

Somit kann die Abstrahlwinkelgebereinheit den Referenzzeitpunkt und die Umlaufdauer auch dann anhand des Referenzsignals bestimmen, wenn die Reflexionsfläche derart angeordnet ist, dass zu keinem Zeitpunkt der Lichtstrahl direkt zu dem Empfänger abgestrahlt wird, und es kann auch bei einer derartigen Anordnung auf einen Winkelgeber für die Drehstellung des Richtrotors vorteilhafterweise verzichtet werden.

Gemäß einer weiteren Ausführungsform weist die Winkelmessvorrichtung eine Abstrahlwinkel-Korrektureinheit zum Bestimmen korrigierter Abstrahlwinkel des von dem Richtrotor abgestrahlten Lichtstrahls durch Korrigieren der ermittelten Abstrahlwinkel des von dem Richtrotor abgestrahlten Lichtstrahls unter Verwendung des Fehlermodells und der Kalibrierparameter auf. Hierbei ist die Auswerteeinheit dazu eingerichtet, den Winkel zwischen den zwei Werkstückflächen als Funktion der korrigierten Abstrahlwinkel zu bestimmen.

Die Abstrahlwinkel-Korrektureinheit kann insbesondere dazu eingerichtet sein, einen jeweiligen ermittelten Abstrahlwinkel zu korrigieren, indem sie die mathematische Funktion des in der Speichereinheit gespeicherten Fehlermodells mit den in der Speichereinheit gespeicherten Kalibrierparametern auf den ermittelten Abstrahlwinkel anwendet und ein Funktionsergebnis zu dem ermittelten Abstrahlwinkel addiert oder von dieser subtrahiert, und ein Additions- bzw. Subtraktionsergebnis als den korrigierten Abstrahlwinkel zu bestimmen.

Gemäß einer weiteren Ausführungsform ist das Fehlermodell ein sinusoidales Fehlermodell.

Ein sinusoidales Fehlermodell erlaubt vorteilhafterweise eine einfache und effiziente Modellierung von Fehlern im Zusammenhang mit der Rotationsbewegung des Richtrotors, bei welchen der Fehler des ermittelten Abstrahlwinkels während eines Umlaufs des abgestrahlten Lichtstrahls um einen Nullpunkt oszilliert. Insbesondere führen mehrere der einflussstärksten vorrichtungsspezifischen Fehlerursachen zu einem sinusoidalen oder annähernd sinusoidalen Fehlerverlauf mit dem einfachen oder zweifachen der Winkelstellung des Richtrotors, so dass durch ein sinusoidales Fehlermodell eine besonders gute Fehlerbeschreibung mit einer minimal erforderlichen Anzahl von Kalibrierparametern geschaffen ist.

Gemäß einer weiteren Ausführungsform umfasst das Fehlermodell eine Linearkombination orthogonaler Funktionen eines Abstrahlwinkels des von dem Richtrotor abgestrahlten Lichtstrahls, und die Kalibrierparameter umfassen Koeffizienten der Linearkombination.

Durch Wahl geeigneter Koeffizienten der Linearkombination der orthogonalen Funktionen, wie beispielsweise einer Sinusfunktion und einer Cosinusfunktion, des Abstrahlwinkels lässt sich das Fehlermodell an die Phasenlage und die Amplitude der Oszillation des Fehlers anpassen.

Gemäß einer weiteren Ausführungsform umfassen die orthogonalen Funktionen eine Sinusfunktion und eine Cosinusfunktion von einem jeweiligen ganzzahligen Vielfachen und/oder einem jeweiligen ganzzahligen Bruch des Abstrahlwinkels des von dem Richtrotor abgestrahlten Lichtstrahls.

Werden Sinus- und Cosinusfunktionen von ganzzahligen Vielfachen und/oder ganzzahligen Brüchen des Abstrahlwinkels in das Fehlermodell einbezogen, können höhere und/oder niedere Ordnungen bzw. Oberschwingungen und/oder Unterschwingungen der Oszillation des Fehlers berücksichtigt werden. Insbesondere können vorteilhafterweise Fehler aufgrund von Rastmomenten in einem magnetischen System des Motors, der den Richtrotor antreibt, modelliert und korrigiert werden. Das Fehlermodell wird präzisiert und die Messgenauigkeit der Winkelmessvorrichtung kann weiter verbessert werden.

Gemäß einer weiteren Ausführungsform ist die Kalibriereinheit dazu eingerichtet, bei einem Kalibriervorgang, bei dem die Rotationsachse des Richtrotors achsparallel zu einer Scheitelachse eines Winkels zwischen zwei ebenen Flächen eines Kalibrierwinkelstücks angeordnet ist und mindestens eine Anordnung aus dem Sender, dem Richtrotor und dem Empfänger durch einen Bediener um die Rotationsachse des Richtrotors zwischen mehreren Schwenkpositionen verschwenkt und an jeder der Schwenkpositionen der Winkel zwischen den ebenen Flächen des Kalibrierwinkelstücks bestimmt wird, die Kalibrierparameter derart zu bestimmen, dass eine Abweichung der Bestimmungen des Winkels zwischen den ebenen Flächen des Kalibrierwinkelstücks an den jeweiligen Schwenkpositionen voneinander verkleinert oder minimiert wird, und die bestimmten Kalibrierparameter in der Speichereinheit zu speichern.

Das Kalibrierwinkelstück kann ein beliebiges Objekt mit zwei ebenen Flächen sein, sofern der von den ebenen Flächen eingeschlossene Winkel fest ist bzw. mindestens während der Dauer des Kalibriervorgangs unverändert bleibt. Der Winkel zwischen den ebenen Flächen des Kalibrierwinkelstücks wird im Weiteren als Kalibrierwinkel bezeichnet. Es sei angemerkt, dass es für eine Kalibrierung der vorgeschlagenen Winkelmessvorrichtung gemäß dem vorgeschlagenen Kalibriervorgang nicht erforderlich ist, dass der Winkelwert des Kalibrierwinkels bekannt ist. Somit kann vorteilhafterweise jedes verfügbare starre Winkelstück als Kalibrierwinkelstück verwendet werden.

Bei dem Verschwenken der Anordnung aus Sender, Richtrotor und Empfänger des Kalibriervorgangs kann beispielsweise die gesamte Winkelmessvorrichtung von Hand durch einen Bediener werden.

Die Kalibriereinheit kann eingerichtet sein, die Auswerteeinheit zu veranlassen, in jeder der Schwenkpositionen den Kalibrierwinkel als Funktion der ermittelten Abstrahlwinkel des von dem Richtrotor abgestrahlten Lichtstrahls ohne Berücksichtigung von Kalibrierparametern oder eines Fehlermodells zu bestimmen beziehungsweise die Korrekturwirkung des Fehlermodells für die Bestimmung des Kalibrierwinkels zu unterbinden. Die Kalibriereinheit kann ferner dazu eingerichtet sein, eine Abweichung zwischen den mehreren Bestimmungen des Kalibrierwinkels an den jeweiligen Schwenkpositionen zu bestimmen, und geeignete Kalibrierparameter zu wählen, bei denen bei einer Wiederholung des Bestimmens des Kalibrierwinkels in jeder der Schwenkpositionen durch die Auswerteeinheit, nun unter Berücksichtigung der gewählten Kalibrierparameter und des gespeicherten Fehlermodells, die Abweichung minimiert wird. Bei der Abweichung kann es sich um eine oder mehrere mathematische oder statistische Größen handeln wie: eine oder mehrere Differenzen zwischen den mehreren Bestimmungen, ein Mittelwert der mehreren Bestimmungen, eine Standardabweichung und/oder eine Varianz der mehreren Bestimmungen.

Durch das Verschwenken wird der Kalibrierwinkel jeweils als Funktion unterschiedlicher ermittelter Abstrahlwinkel und somit bei unterschiedlichen Drehstellungen des umlaufenden Richtrotors bestimmt. Sind die ermittelten Abstrahlwinkel mit einem von dem Abstrahlwinkel bzw. der Drehstellung des Richtrotors abhängigen Fehler behaftet, so weichen die Bestimmungen des konstanten Kalibrierwinkels voneinander ab. Durch Wählen geeigneter Kalibrierparameter kann das Fehlermodell derart angepasst werden, dass es ein mindestens näherungsweises Modell für die vorrichtungsspezifischen Fehlerursachen darstellt, so dass bei nachfolgenden Messungen eine Abweichung minimiert wird. Somit verringert sich vorteilhafterweise eine Streuung der Messwerte, und die Messgenauigkeit der Winkelmessvorrichtung wird verbessert. Dabei kann ein Bediener den Justiervorgang vorteilhafterweise einfach und in sehr kurzer Zeit durchführen.

Gemäß einer weiteren Ausführungsform umfassen die mehreren Schwenkpositionen eine jeweilige äußerste Position und eine mittlere Position eines Schwenkbereichs. Der Schwenkbereich umfasst mindestens 30°, vorzugsweise 60° und besonders vorzugsweise 90°.

Je größer der Schwenkbereich bei dem Kalibriervorgang gewählt ist, desto genauer kann bei dem Kalibriervorgang das Fehlermodell an die vorrichtungsspezifischen Fehlerursachen angepasst werden.

Gemäß einer weiteren Ausführungsform ist die Kalibriereinheit dazu eingerichtet, bei dem Kalibriervorgang weiterhin das Fehlermodell derart zu bestimmen, dass die Abweichung der Bestimmungen des Winkels zwischen den ebenen Flächen des Kalibrierwinkelstücks an den jeweiligen Schwenkpositionen voneinander verkleinert oder minimiert wird, und das bestimmte Fehlermodell in der Speichereinheit zu speichern.

Beispielsweise kann die Kalibriereinheit dazu eingerichtet sein, bei dem Kalibriervorgang eine kleinste durch Wahl geeigneter Kalibrierparameter mit dem gespeicherten Fehlermodell erreichbare Abweichung zwischen den Bestimmungen des Kalibrierwinkels an den mehreren Schwenkpositionen mit einem vorgegebenen Schwellwert zu vergleichen und, falls die kleinste Abweichung über dem Schwellwert liegt, ein präziseres Fehlermodell zu wählen und in der Speichereinheit zu speichern und erneut geeignete Kalibrierparameter zu bestimmen, mit denen in Verbindung mit dem präziseren Fehlermodell die Abweichung zwischen den Bestimmungen des Kalibrierwinkels an den mehreren Schwenkpositionen weiter verringert oder minimiert wird. Ein präziseres Fehlermodell kann beispielsweise ein Fehlermodell mit einer größeren Anzahl von Koeffizienten bzw. Kalibrierparametern sein.

Wird beispielsweise statt eines Fehlermodells, das eine Sinus- und eine Cosinusfunktion des Abstrahlwinkels des von dem Richtrotor abgestrahlten Lichtstrahls umfasst, ein Fehlermodell gewählt, das weiterhin Sinus- und Cosinusfunktionen von ganzzahligen Vielfachen des Abstrahlwinkels umfasst, so können auch Oberschwingungen der Oszillation des Fehlers während der Rotation des Richtrotors berücksichtigt werden. Die Genauigkeit der Kalibrierung und damit die Messgenauigkeit der Winkelmessvorrichtung kann weiter verbessert werden.

Gemäß einer weiteren Ausführungsform ist die Kalibriereinheit dazu eingerichtet, die Kalibrierparameter durch ein iteratives numerisches Verfahren zu bestimmen. Ein Beispiel für ein iteratives numerisches Verfahren ist die Methode der konjugierten Gradienten.

Somit lassen sich die Kalibrierparameter auch dann bestimmen, wenn das Fehlermodell keine exakte analytische Lösung erlaubt.

Gemäß einer weiteren Ausführungsform weist die Winkelmessvorrichtung ein Bedienelement auf, das dazu eingerichtet ist, der Kalibriereinheit ein Durchführen des Kalibriervorgangs zu signalisieren, wenn ein Bediener das Bedienelement betätigt.

Das Bedienelement kann beispielsweise eine als physikalischer Knopf oder als Schaltfläche auf einem Display ausgeführte Taste sein.

Gemäß einer weiteren Ausführungsform weist die Winkelmessvorrichtung eine Benutzerschnittstelleneinheit auf, die dazu eingerichtet ist, einem Bediener ein manuelles Auswählen des Fehlermodells und/oder ein manuelles Festlegen der Kalibrierparameter zu ermöglichen.

Die Benutzerschnittstelleneinheit kann ein Ausgabemittel und ein Eingabemittel umfassen. Das Ausgabemittel kann beispielsweise ein LCD- oder TFT-Display und das Eingabemittel eine Tastatur oder ein Tastenfeld umfassen, oder die Benutzerschnittstelleneinheit kann als Touchscreen ausgebildet sein.

Somit lässt sich eine Kalibrierung der Winkelmessvorrichtung manuell durchführen, falls eine automatische Bestimmung der Kalibrierparameter und/oder des Fehlermodells durch die Kalibriereinheit keine optimalen Ergebnisse liefert.

Gemäß einer weiteren Ausführungsform ist die Winkelmessvorrichtung als Handwinkelmessvorrichtung mit einer Anzeigeeinheit zum Anzeigen des von der Auswerteeinheit bestimmten Winkels ausgebildet.

Eine jeweilige Einheit, wie die Abstrahlwinkelgebereinheit, die Auswerteeinheit, die Kalibriereinheit und/oder die Drehwinkel-Korrektureinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer, als Mikroprozessor, als programmierbare Steuereinheit oder als fest verdrahtete Schaltung ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einem zweiten Aspekt und Anspruch 17 wird ein Verfahren zum Bestimmen eines Winkels zwischen zwei Werkstückflächen vorgeschlagen mit den Schritten: Erzeugen eines Lichtstrahls mittels eines Senders; Abstrahlen des erzeugten Lichtstrahls mittels eines kontinuierlich umlaufenden Richtrotors in einer umlaufenden, zu einer Rotationsachse des Richtrotors senkrechten Abstrahlrichtung als abgestrahlter Lichtstrahl; Empfangen eines reflektierten Lichtstrahls mittels eines Empfängers, wenn die Rotationsachse des Richtrotors achsparallel zu einer Scheitelachse des Winkels angeordnet ist und der abgestrahlte Lichtstrahl von einer der zwei Werkstückflächen antiparallel zu der Abstrahlrichtung als reflektierter Lichtstrahl reflektiert wird; Ermitteln jeweiliger Abstrahlwinkel des von dem Richtrotor abgestrahlten Lichtstrahls, bei denen der Empfänger den reflektierten Lichtstrahl empfängt; Bestimmen mindestens von Kalibrierparametern; Speichern der Kalibrierparameter und eines Fehlermodells, wobei die Kalibrierparameter Koeffizienten einer mathematischen Funktion des Fehlermodells sind, das Fehlermodell einen winkelabhängigen Fehler des von der Abstrahlwinkelgebereinheit ermittelten Abstrahlwinkels beschreibt und der winkelabhängige Fehler eine vorrichtungsspezifische Fehlerursache aufweist; und Bestimmen des Winkels als Funktion der ermittelten Abstrahlwinkel des von dem Richtrotor abgestrahlten Lichtstrahls, der gespeicherten Kalibrierparameter und des gespeicherten Fehlermodells.

Gemäß einer Ausführungsform des zweiten Aspekts umfasst das Verfahren ferner: Bereitstellen eines Kalibrierwinkelstücks mit zwei ebenen Flächen, die einen Winkel einschließen; Anordnen der Rotationsachse des Richtrotors achsparallel zu der Scheitelachse des Winkels zwischen den ebenen Flächen des Kalibrierwinkelstücks, Verschwenken einer Anordnung, welche mindestens den Sender, den Richtrotor und den Empfänger umfasst, um die Rotationsachse des Richtrotors zwischen mehreren Schwenkpositionen, Bestimmen des Winkels zwischen den ebenen Flächen des Kalibrierwinkelstücks an jeder der Schwenkpositionen; und Bestimmen der Kalibrierparameter und/oder des Fehlermodells derart, dass eine Abweichung der Bestimmungen des Winkels zwischen den ebenen

Flächen des Kalibrierwinkelstücks an den jeweiligen Schwenkpositionen voneinander verkleinert oder minimiert wird.

Die für die vorgeschlagene Vorrichtung beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt eine schematische Stirnansicht einer vorgeschlagenen Winkelmessvorrichtung gemäß einem ersten Ausführungsbeispiel.
- Fig. 2: veranschaulicht ein Verfahren zum Bestimmen eines Winkels mit einer vorgeschlagenen Winkelmessvorrichtung.
- Fig. 3: zeigt eine Auftragung eines Signalverlaufs des Empfängers in Abhängigkeit von dem Abstrahlwinkel des abgestrahlten Lichtstrahls bei einer vorgeschlagenen Winkelmessvorrichtung.
- Fig. 4: zeigt ein Anwendungsbeispiel für eine vorgeschlagene Winkelmessvorrichtung und ein vorgeschlagenes Verfahren zum Bestimmen eines Winkels.
- Fig. 5: zeigt eine schematische seitliche Ansicht einer Winkelmessvorrichtung gemäß einem zweiten Ausführungsbeispiel.
- Fig. 6: zeigt eine Auftragung eines Signalverlaufs des Empfängers in Abhängigkeit von der Zeit bei einer Winkelmessvorrichtung gemäß dem zweiten Ausführungsbeispiel.
- Fig. 7: zeigt eine schematische Darstellung einer Laserdiode in einer vorgeschlagenen Winkelmessvorrichtung.
- Fig. 8: zeigt eine Auftragung eines Signalverlaufs des Empfängers, eines Fehlermodells und eines korrigierten Signalverlaufs des Empfängers in Abhängigkeit von dem Abstrahlwinkel des abgestrahlten Lichtstrahls.
- Fig. 9: veranschaulicht Schritte zum Bestimmen der Kalibrierparameter gemäß einem vorgeschlagenen Verfahren.
- Fig. 10: zeigt eine Skizze zur Veranschaulichung eines Kalibriervorgangs einer vorgeschlagenen Winkelmessvorrichtung.
- Fig. 11a-c: zeigen Auftragungen eines Signalverlaufs des Empfängers in Abhängigkeit von dem Abstrahlwinkel des abgestrahlten Lichtstrahls in verschiedenen Schwenkpositionen während des Kalibriervorgangs.

In den Figuren sind gleiche oder funktionsgleiche Elemente mit denselben Bezugszeichen versehen worden, sofern nichts anderes angegeben ist.

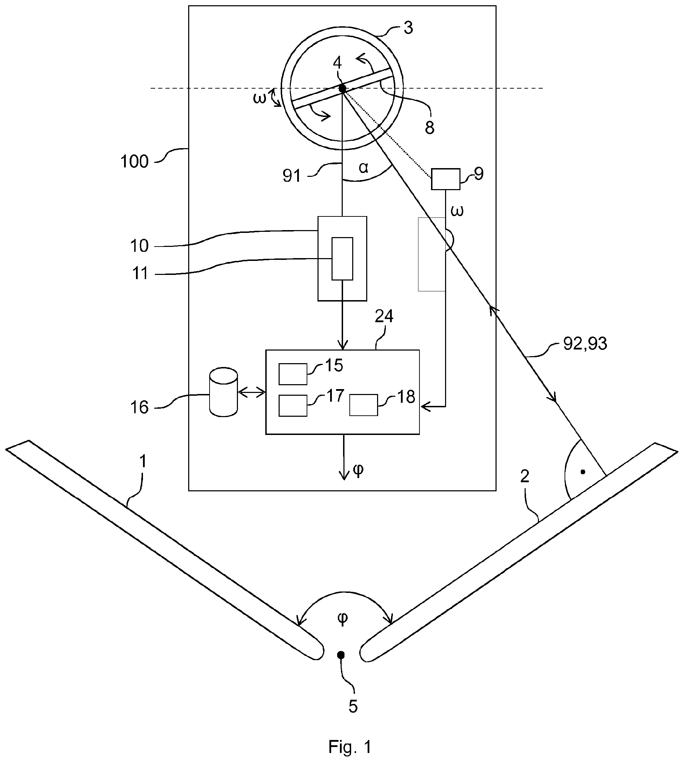

Fig. 1 zeigt eine schematische Darstellung einer Winkelmessvorrichtung 100 gemäß einem ersten Ausführungsbeispiel.

Die Winkelmessvorrichtung 100 in Fig. 1 ist zwischen zwei Werkstückflächen 1, 2 angeordnet, die einen zu bestimmenden Winkel ϕ mit einer Scheitelachse 5 einschließen. Die Werkstückflächen 1, 2 können Werkstückflächen eines selben Werkstücks oder Werkstückflächen verschiedener beispielsweise in fester räumlicher Anordnung zueinander angeordneter Werkstücke oder Objekte sein. Die Darstellung in Fig. 1 ist nicht maßstäblich.

Die Winkelmessvorrichtung 100 aus Fig. 1 weist einen Sender 10 auf, der einen Lichtstrahl 91 erzeugt; einen Richtrotor 3 mit einer Reflexionsfläche 8, die mit dem Richtrotor 3 um eine Rotationsachse 4 umläuft und in Richtung der Rotationsachse 4 verläuft und den erzeugten Lichtstrahl 91 als abgestrahlten Lichtstrahl 92 in einem umlaufenden Abstrahlwinkel α abstrahlt, und einen Empfänger 11, der im Wesentlichen bei dem Sender 10 angeordnet ist. Der Empfänger 11 gibt ein elektrisches Signal, das eine von dem Empfänger 11 empfange Lichtintensität angibt, an eine Verarbeitungseinheit 24 aus. In Fig. 1 ist ein Zeitpunkt veranschaulicht, zu dem der abgestrahlte Lichtstrahl 92 unter dem momentanen Abstrahlwinkel α in Richtung einer Werkstückfläche 2 abgestrahlt wird.

Die Verarbeitungseinheit 24 umfasst eine Auswerteeinheit 17, eine Kalibriereinheit 15 und eine Abstrahlwinkelgebereinheit 18. Die Verarbeitungseinheit 24 ist mit einer Speichereinheit 16 und einem Winkelgeber 9 verbunden. In der Speichereinheit 16 ist ein Fehlermodell (nicht gezeigt) gespeichert, das zur Modellierung von vorrichtungsspezifischen Fehlerursachen der Winkelmessvorrichtung 100 geeignet ist. In der Speichereinheit 16 können Kalibrierparameter für das Fehlermodell gespeichert werden, um die Winkelmessvorrichtung 100 durch Modellieren ihrer vorrichtungsspezifischen Fehlerursachen zu kalibrieren. Dies wird später im Detail beschrieben. Der Winkelgeber 9 ist mit einer Welle (nicht gezeigt) eines den Richtrotor 3 antreibenden Synchronmotors (nicht gezeigt) gekoppelt und gibt eine Drehstellung ω der Welle des Richtrotors 3 aus. Die Verarbeitungseinheit 24 bestimmt den Winkel ϕ als Funktion von Eingabewerten und -signalen, die sie von dem Empfänger 11, dem Winkelgeber 9 und der Speichereinheit 16 erhält, und gibt ein Signal aus, das den bestimmten Winkel ϕ als Messergebnis anzeigt.

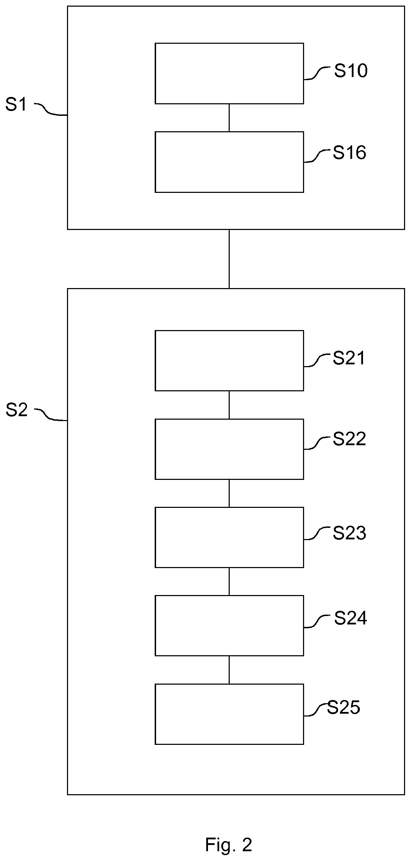

Fig. 2 veranschaulicht ein Verfahren zum Bestimmen eines Winkels ϕ mit einer vorgeschlagenen Winkelmessvorrichtung. Das Verfahren wird nun anhand Fig. 2 und der in Fig. 1 gezeigten Winkelmessvorrichtung 100 erläutert.

Das Verfahren umfasst eine Verfahrensstufe S1 zum Kalibrieren der Winkelmessvorrichtung 100 und eine Verfahrensstufe S2 zum Bestimmen des zu bestimmenden Winkels ϕ.

In Verfahrensstufe S1 werden in Schritt S10 mit Hilfe der Kalibriereinheit 15 der Verarbeitungseinheit 24 Kalibrierparameter bestimmt, bei denen es sich um Koeffizienten für das in der Speichereinheit 16 gespeicherte Fehlermodell handelt. Die Kalibrierparameter werden derart bestimmt, dass das Fehlermodell zusammen mit den Kalibrierparametern die vorrichtungsspezifischen Fehlerursachen der Winkelmessvorrichtung 100 mindestens näherungsweise modelliert. Dies wird später im Detail beschrieben.

In Schritt S16 werden die in Schritt S10 bestimmten Kalibrierparameter in der Speichereinheit 16 gespeichert.

Zum Durchführen der Verfahrensstufe S2 zum Bestimmen des Winkels ϕ wird die Winkelmessvorrichtung 100 derart zwischen den zwei Werkstückflächen 1, 2 angeordnet, dass die Rotationsachse 4 des Richtrotors 3 im Wesentlichen achsparallel zu der Scheitelachse 5 des zu bestimmenden Winkels ϕ ist, wie in Fig. 1 gezeigt.

Der Sender 10 erzeugt (Schritt S21) einen kontinuierlichen Lichtstrahl 91, der sich im Wesentlichen in einer Ausbreitungsrichtung von dem Sender 10 zu der Rotationsachse 4 des Richtrotors 3 ausbreitet. Der erzeugte Lichtstrahl 91 wird von der Reflexionsfläche 8 des gegen den Uhrzeigersinn umlaufenden Richtrotors 3 als abgestrahlter Lichtstrahl 92 in einer umlaufenden Abstrahlrichtung abgestrahlt (Schritt S22). Anders ausgedrückt fächert der umlaufende Richtrotor 3 den einfallenden Lichtstrahl 91 in eine Abstrahlebene (Zeichnungsebene in Fig. 1) auf.

In Fig. 1 bezeichnet der Winkel α den Abstrahlwinkel α zwischen der augenblicklichen Abstrahlrichtung des abgestrahlten Lichtstrahls 92 und der Ausbreitungsrichtung des erzeugten Lichtstrahls 91. Der Winkel ω bezeichnet eine Drehstellung ω des Richtrotors bzw. der Reflexionsfläche 8 gegenüber einer Referenzlage, bei welcher die Reflexionsfläche 8 orthogonal zu der Ausbreitungsrichtung des erzeugten Lichtstrahls 91 ausgerichtet ist (gestrichelte Line in Fig. 1). Bei dem in Fig. 1 gezeigten Ausführungsbeispiel gilt α = 2ω, d.h., während einer halben Umdrehung (Drehung um 180°) des Richtrotors 3 überstreicht der abgestrahlte Lichtstrahl 92 im Wesentlichen die gesamte Abstrahlebene (Drehung um 360°, ausgehend von der Referenzlage bei α=0° bis nahezu 180° und weiter von ungefähr -180° bis 0°).

Fig. 1 zeigt eine spezielle Abstrahlrichtung α = α₂, bei welcher der abgestrahlte Lichtstrahl 92 im Wesentlichen orthogonal auf die Werkstückfläche 2 trifft und antiparallel zu seiner Abstrahlrichtung als reflektierter Lichtstrahl 93 reflektiert wird. Dies hat zur Folge, dass der reflektierte Lichtstrahl 93 wieder auf die Reflexionsfläche 8 des Richtrotors 3 trifft und von dort weiter in Richtung des Senders 10 und im Speziellen des im Wesentlichen bei dem Sender 10 angeordneten Empfängers 11 reflektiert wird, so dass der Empfänger 11 den reflektierten Lichtstrahl 93 empfängt (Schritt S23). Der Empfänger 11 empfängt den reflektierten Lichtstrahl 93 ein weiteres Mal, wenn der abgestrahlte Lichtstrahl 91 bei einer Abstrahlrichtung α = α₁ im Wesentlichen orthogonal auf die Werkstückfläche 1 trifft.

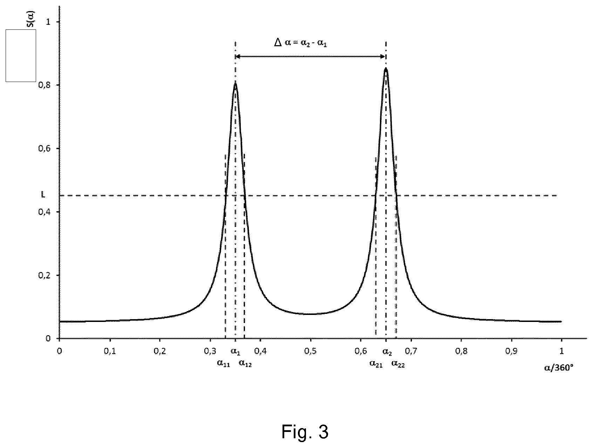

In Schritt S24 ermittelt die Verarbeitungseinheit 24 mittels der Abstrahlwinkelgebereinheit 18 die Abstrahlwinkel α₁, α₂ des Lichtstrahls, bei denen der Empfänger den reflektierten Lichtstrahl 93 empfängt. Fig. 3 zeigt einen Signalverlauf des von dem Empfänger 11 an die Verarbeitungseinheit 24 ausgegebenen Signals S in Abhängigkeit vom Abstrahlwinkel α des abgestrahlten Lichtstrahls 92. Die Verarbeitungseinheit 24 überwacht das Signal S und veranlasst, dass die Abstrahlwinkelgebereinheit 18 den Winkel α₁₁ ermittelt, wenn das Signal S einen vorgegeben Schwellwert L überschreitet, sowie den Winkel α₁₂ ermittelt, wenn das Signal unter den vorgegebenen Schwellwert L sinkt. Die Abstrahlwinkelgebereinheit 18 bezieht zum Ermitteln eines jeweiligen Abstrahlwinkels α jeweils eine Drehstellung ω des Richtrotors 3 von dem Winkelgeber 9 und multipliziert diese, um die Geometrie der in Fig. 1 gezeigten Anordnung zu berücksichtigen, mit zwei. Sodann bestimmt die Abstrahlwinkelgebereinheit 18 den Abstrahlwinkel α₁ als Mittelwert der Winkel α₁₁ und α₁₂. Der Abstrahlwinkel α₂ wird auf gleichartige Weise als Mittelwert der Winkel α₁ und α₂₂ bestimmt.

In Schritt S25 bestimmt die Verarbeitungseinheit 24 mittels der Auswerteeinheit 15 den Winkel ϕ als Funktion der ermittelten Abstrahlwinkel α₁ und α₂, des in der Speichereinheit 16 gespeicherten Fehlermodells und der in der Speichereinheit 16 gespeicherten Kalibrierparameter den Winkel ϕ. Gemäß Fig. 1 in Verbindung mit Fig. 3 ergibt sich der Winkel ϕ bei theoretischer Abwesenheit von vorrichtungsspezifischen Fehlerursachen durch den Ausdruck ϕ=180°-Δα, wobei die Auswerteeinheit 15, den Winkel ϕ und/oder die Abstrahlwinkel α₁ und α₂ und/oder deren Differenz Δα unter Verwendung des Fehlermodells und der Kalibrierparameter korrigiert, wie später im Detail beschrieben.

Gemäß dem beschriebenen Verfahren wurde somit der Winkel ϕ berührungslos und mit hoher Genauigkeit bestimmt.

In einer Variante des ersten Ausführungsbeispiels der Winkelmessvorrichtung 100 ist der Winkelgeber 9 nicht vorgesehen, und die Abstrahlwinkelgebereinheit 18 bestimmt die Abstrahlwinkel durch Zeitmessung, wie später im Detail beschrieben.

In einer weiteren Variante des ersten Ausführungsbeispiels ist die Reflexionsfläche 8 nicht vorgesehen, und mindestens der Empfänger 10 und der Sender 11 sind auf dem Richtrotor 3 befestigt und laufen mit diesem um die Rotationsachse 4 um. In einer weiteren Variante läuft der Richtrotor 3 nicht kontinuierlich um, sondern führt eine periodische Pendelbewegung aus, so dass der Lichtstrahl nur über ein festgelegtes Winkelsegment von beispielsweise 180 Grad aufgefächert wird, was die elektrische Anbindung von Sender 11 und Empfänger 10 vereinfacht.

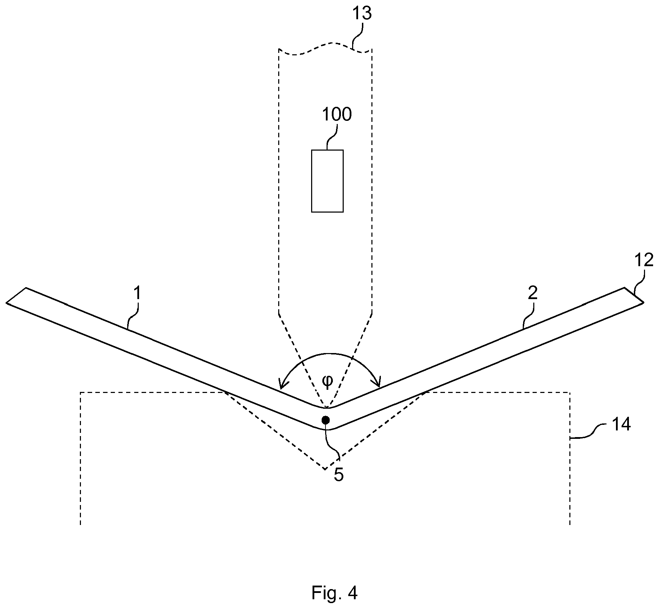

Fig. 4 zeigt ein Anwendungsbeispiel für eine vorgeschlagene Winkelmessvorrichtung 100. Im Speziellen zeigt Fig. 4 ein zu biegendes Werkstück 12 mit zwei Werkstückflächen 1, 2, das von einem Stempel 13 in eine Matrize 14 gepresst wird. Der Stempel ist beispielsweise ein Oberwerkzeug einer Blechbiegemaschine. Die Winkelmessvorrichtung 100 ist ein von dem Stempel 100 unabhängiges Gerät wie beispielsweise ein Handwinkelmessgerät, das beispielsweise von einem Bediener zwischen die Werkstückflächen 1, 2 gehalten wird. Die Winkelmessvorrichtung 100 bestimmt fortwährend den Winkel ϕ zwischen den Werkstückflächen 1, 2, während das Werkstück 12 in die Matrize 14 gepresst wird. Wenn der gewünschte Winkel ϕₛₒₗₗ unter Einbeziehung einer werkstoffspezifischen Uberbiegung erreicht ist, beendet der Bediener das Pressen. So kann ein Werkstück mit einem gewünschten Winkel ϕₛₒₗₗ präzise hergestellt werden.

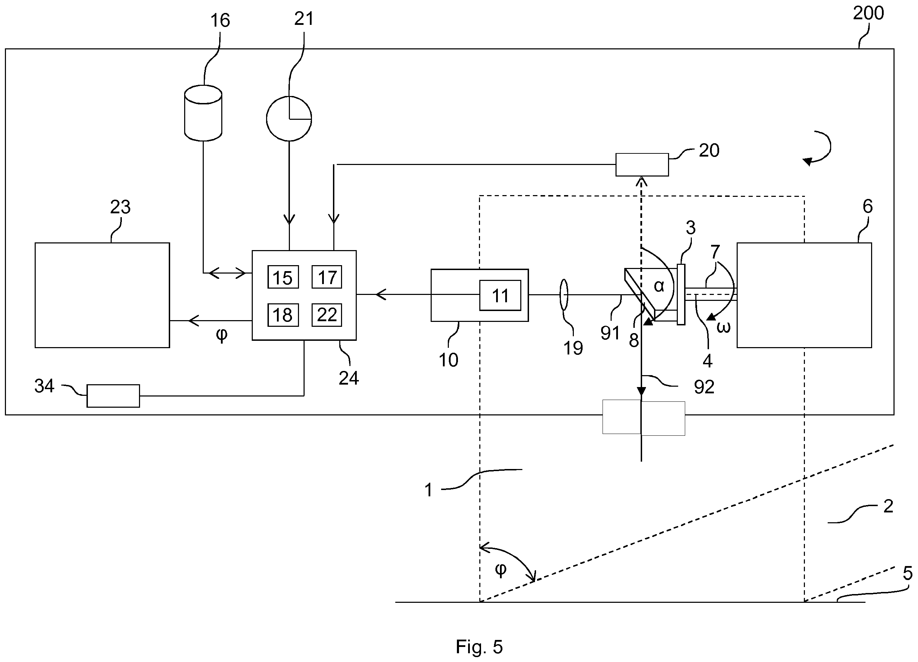

Fig. 5 zeigt ein zweites Ausführungsbeispiel einer vorgeschlagenen Winkelmessvorrichtung 200 in einer schematischen Seitenansicht. Nachstehend werden die Unterschiede zu dem ersten Ausführungsbeispiel beschrieben.

Die Winkelmessvorrichtung 200 ist als Handwinkelmessgerät ausgebildet und weist eine Anzeigeeinheit 23 zum Anzeigen des bestimmten Winkels ϕ sowie ein Tastenfeld 34 auf. Das Tastenfeld 34 wird als Bedienelement benutzt, um der Kalibriereinheit 15 des Handwinkelmessgeräts 200, wie später im Detail beschrieben, den Beginn eines Kalibriervorgangs zu signalisieren, und/oder als Teil einer das Tastenfeld 34 und die Anzeigeeinheit 23 umfassenden Benutzerschnittstelleneinheit, mit welcher ein Benutzer die in der Speichereinheit 16 gespeicherten Kalibrierparameter und/oder das Fehlermodell manuell festlegen und/oder korrigieren kann.

Bei dem Handwinkelmessgerät 200 verläuft anders als bei der Winkelmessvorrichtung 100 die Rotationsachse 4 des von einem Miniatur-Synchronmotor 6 über eine Welle 7 angetriebenen Richtrotors 3 achsgleich mit der Ausbreitungsrichtung des erzeugten Lichtstrahls 91. Die Reflexionsfläche 8 des Richtrotors 3 verläuft in einem Winkel von 45° schräg zu der Rotationsachse 4 des Richtrotors 3. Der erzeugte Lichtstrahl 91 wird somit als abgestrahlter Lichtstrahl 92 in einer Abstrahlebene aufgefächert, die orthogonal sowohl zu der Rotationsachse 4 des Richtrotors 3 als auch zu der Ausbreitungsrichtung des erzeugten Lichtstrahls 91 steht. Die Drehstellung ω des Richtrotors und der Abstrahlwinkel α des von dem Richtrotor 3 abgestrahlten Lichtstrahls 92 sind im zweiten Ausführungsbeispiel, abgesehen von möglichen Abweichungen aufgrund vorrichtungsspezifischer Fehlerursachen, identisch.

Das Handwinkelmessgerät 200 weist ferner einen Zeitgeber 21 auf, der ein getaktetes Zeitsignal an die Verarbeitungseinheit 24 ausgibt, sowie einen in der Abstrahlebene angeordneten Referenzsignalgeber 20, wie eine Photodiode. Die Photodiode 20 gibt ein Referenzsignal an die Verarbeitungseinheit 24 aus, wenn die Photodiode 20 von dem umlaufenden abgestrahlten Lichtstrahl 92 überstrichen wird, was in Fig. 5 durch einen gestrichelten Pfeil angedeutet ist.

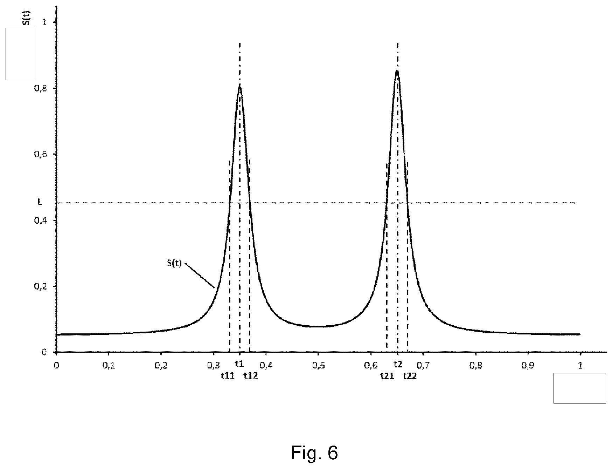

Ein Winkelgeber für die Drehstellung des Richtrotors 3 ist nicht vorgesehen. Die Abstrahlwinkelgebereinheit 18 des Handwinkelmessgeräts 200 ermittelt in Schritt S24 die Abstrahlwinkel, bei denen der Empfänger 11 den reflektierten Lichtstrahl 93 empfängt, durch Zeitmessung, wie im Folgenden anhand von Fig. 6 beschrieben wird.

Fig. 6 zeigt eine Auftragung eines Signalverlaufs des Empfängers 11 in Abhängigkeit von der Zeit bei dem Handwinkelmessgerät 200. Da der Richtrotor 3 mit einer im Wesentlichen konstanten Rotationsgeschwindigkeit umläuft, ist der zeitabhängige Signalverlauf aus Fig. 6 qualitativ derselbe wie der winkelabhängige Signalverlauf aus Fig. 3.

Die Abstrahlwinkelgebereinheit 18 des Handwinkelmessgeräts 200 bestimmt daher anhand des getakteten Zeitsignals des Zeitgebers 21 die Zeitpunkte t₁ und t₂, bei denen der Empfänger 11 den reflektierten Lichtstrahl 93 empfängt, analog zum ersten Ausführungsbeispiel durch Bilden eines Mittelwerts zwischen jeweiligen Zeitpunkten t₁₁, t₁₂ bzw. t₂₁, t₂₂, bei denen das Signal des Empfängers 11 einen vorbestimmten Schwellwert L über- bzw. unterschreitet. Anschließend ermittelt die Abstrahlwinkelgebereinheit 18 die Abstrahlwinkel α₁, α₂, bei denen der Empfänger 11 den abgestrahlten Lichtstrahl 3 empfängt, indem sie die Zeitpunkte t₁ und t₂ mit der Umlaufdauer T des abgestrahlten Lichtstrahls 92 in Relation setzt: αᵢ = (tᵢ-t₀) / T, mit i=1,2. Den Zeitpunkt t₀, bei dem der abgestrahlte Lichtstrahl 92 in der Referenzrichtung (α=0) abgestrahlt wird, bestimmt die Abstrahlwinkelgebereinheit 18 als den Zeitpunkt, zu dem der Referenzsignalgeber 18 ein Referenzsignal ausgibt, und die Umlaufdauer T bestimmt die Abstrahlwinkelgebereinheit 18 aus der Zeitdifferenz zwischen zwei Referenzsignalen.

Auf diese Weise kann auf den Winkelgeber 9 für die Drehstellung des Richtrotors 3 verzichtet werden, und es können eine besonders kompakte Bauform und niedrige Herstellungskosten des Handwinkelmessgeräts 200 erzielt werden.

Die Verarbeitungseinrichtung 24 des Handwinkelmessgeräts 200 gemäß dem zweiten Ausführungsbeispiel weist ferner eine Abstrahlwinkel-Korrektureinheit 22 auf. Die Abstrahlwinkel-Korrektureinheit 22 bestimmt in Schritt S25 korrigierte Abstrahlwinkel α_{korr,1}, α_{korr,2}, indem sie die Abstrahlwinkel α₁, α₂ unter Verwendung des in der Speichereinheit 16 gespeicherten Fehlermodells und der in der Speichereinheit 16 gespeicherten Kalibrierparameter korrigiert, wie nachstehend näher beschrieben. Anschließend bildet die Auswerteeinheit 15 die Winkeldifferenz Δα=αₖₒᵣᵣ₁-αₖₒᵣᵣ₂ und bestimmt den Winkel ϕ zu ϕ = 180° - Δα.

Bei den vorgestellten Ausführungsbeispielen einer vorgeschlagene Winkelmessvorrichtung 100, 200 können insbesondere folgende vorrichtungsspezifische Fehlerursachen vorliegen, die die Messgenauigkeit der Winkelbestimmung beeinträchtigen:
Insbesondere wenn die Winkelmessvorrichtung 100, 200 ein Handgerät ist, bestehen Bestrebungen, die Winkelmessvorrichtung 100, 200 möglichst kompakt zu halten. Der Motor 6 kann insbesondere nur wenige Millimeter Durchmesser aufweisen. Dadurch ist das Massenträgheitsmoment des Motors 6 sehr klein, und Asymmetrien und Rastmomente in einem magnetischen System des Motors 6 können zu Schwankungen der Winkelgeschwindigkeit innerhalb eines Umlaufs führen, auch wenn eine Umlaufdurchschnittsgeschwindigkeit des Motors 6 über mehrere Umdrehungen konstant gehalten wird. Wird ebenfalls im Zuge der Miniaturisierung auf den Winkelgeber 9 verzichtet und werden, wie vorstehend beschreiben, die Abstrahlwinkel α₁, α₂ basierend auf den Zeitpunkten t₁, t₂, bei denen der Empfänger 11 den reflektierten Lichtstrahl 3 empfängt, sowie der Umlaufdauer T des von dem Richtrotor 3 abgestrahlten Lichtstrahls 92 bestimmt, so führt eine ungleichmäßige Winkelgeschwindigkeit des Motors 6 zu einem um einen Nullpunkt oszillierenden Fehler der ermittelten Abstrahlwinkel α₁, α₂. Das heißt, abhängig von der Drehstellung ω des Richtrotors 3 bzw. abhängig von dem Absolutwert des tatsächlichen Abstrahlwinkels α werden abwechselnd zu kleine und zu große Abstrahlwinkel α bestimmt. Je nach einer relativen Orientierung der Winkelmessvorrichtung 100, 200 zu den Werkstückflächen 1, 2 erfolgt die Bestimmung des Winkels ϕ bei unterschiedlichen absoluten Abstrahlwinkeln α₁, α₂, so dass sich je nach der Orientierung voneinander abweichende, um einen Mittelwert oszillierende Bestimmungen der Abstrahlwinkel α₁, α₂ und damit des Winkels ϕ ergeben.

Weiterhin ist es bei einer miniaturisierten Winkelmessvorrichtung 100, 200 schwierig, die Rotationsachse 4 des Richtrotors 3 und die Ausbreitungsrichtung des erzeugten Lichtstrahls 91, d.h. die Achse des Senders 10, exakt aneinander auszurichten. Weicht beispielsweise bei der Anordnung der Winkelmessvorrichtung 200 gemäß dem zweiten Ausführungsbeispiel die Ausrichtung des Senders 10 um einen bestimmten Winkelfehler von der Rotationsachse 4 des Richtrotors 3 ab, so bewirkt dies während eines Umlaufs der Reflexionsfläche 8 des Richtrotors 3 ein umlaufsynchrones Umwandern des in die Abstrahlebene aufgefächerten abgestrahlten Lichtstrahls 92 entlang eines Kegelmantels um eine gedachte Achse oder Abstrahlrichtung, wie sie bei fehlerfreier Ausrichtung vorläge. Somit eilt der Abstrahlwinkel des abgestrahlten Lichtstrahls 92 entlang einer Hälfte eines Umlaufes gegenüber der Drehstellung des Richtrotors 3 vor und fällt entlang der anderen Hälfte gegenüber der Drehstellung des Richtrotors 3 zurück. Auch in diesem Fall ergibt sich also ein abhängig von der Orientierung der Winkelmessvorrichtung 200 gegenüber den Werkstückflächen 2, 1 um einen Nullpunkt oszillierender Fehler der ermittelten Abstrahlwinkel α₁, α₂.

Eine weitere vorrichtungsspezifische Fehlerursache liegt in der vorstehend beschriebenen Anordnung des Empfängers 11 im Wesentlichen bei dem Sender 10. Soll im Zuge der Miniaturisierung auf einen halbdurchlässigen Spiegel im Strahlengang verzichtet werden, so wäre es theoretisch erforderlich, den Empfänger 11 exakt auf der Achse des von der Reflexionsfläche 8 in Richtung Sender 10 reflektierten Lichtstrahls 93 anzuordnen, damit der Empfänger 11 den reflektierten Lichtstrahl 3 empfängt, wenn dieser exakt antiparallel von einer der Werkstückflächen 1, 2 reflektiert wird.

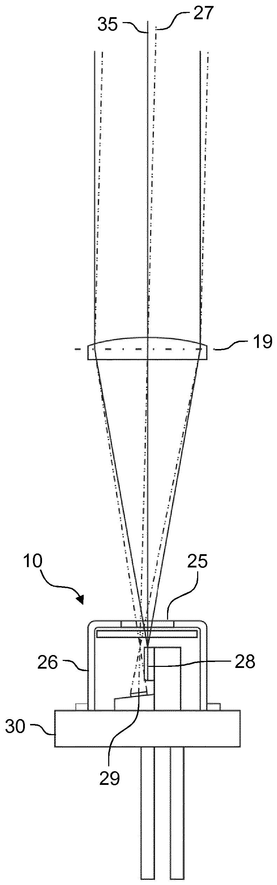

Fig. 7 zeigt eine schematische Darstellung einer Laserdiode 10, die beispielsweise in dem Handwinkelmessgerät 200 als Sender 10 mit in den Sender 10 integriertem Empfänger 11 benutzt wird. Die Laserdiode weist eine Kapsel 26 mit einem Glasfenster 25, einen Laserchip 28, eine Monitordiode 29 und eine Basis 30 auf. Die Monitordiode 29 erfasst einen zur vom Laserchip 28 abgegebenen Laserleistung proportionalen Lichtanteil direkt von einer teildurchlässig verspiegelten Rückseite des Laserchips 28 und gleichzeitig den von außen von einer der Werkstückflächen 1,2 zur Laserdiode 10 zurück reflektierten Lichtstrahl 93 und liefert ein zur gesamten erfassten Lichtmenge proportionales Stromsignal. Die Monitordiode 29 dient daher bei dem Handwinkelmessgerät 200 als Empfänger 11.

Der Laserchip 28 erzeugt Laserlicht mit einem Öffnungswinkel von beispielsweise 8° bis 22° aus einer nur wenige µm kleinen, also nahezu ideal punktförmigen Abstrahlfläche. Aus diesem Grund ist bei dem Handwinkelmessgerät 200 eine Kollimationsoptik 19 vorgesehen, die das erzeugte Laserlicht zu einem Strahl bündelt. Die Laserdiode 10 ist deswegen derart positioniert, dass der Laserchip 28 im Brennpunkt der Kollimationsoptik 19 liegt. Die Monitordiode 29 weist eine gegenüber der Abstrahlfläche des Laserchips vergleichsweise großflächige Ausdehnung auf und ist in einem gewissen Abstand zu dem im Brennpunkt positionierten Laserchip 28 und damit abseits der Achse 35 des erzeugten Lichtstrahls 91 und damit auch des exakt antiparallel reflektierten Lichtstrahls 93 positioniert. Insbesondere ist die Zentrumsachse 27 des Sichtfelds der Monitordiode 29 aufgrund der gegenüber der Achse 35 des erzeugten Lichtstrahls außermittigen Positionierung gegenüber der Ausbreitungsrichtung des von der Kollimationsoptik 19 gebündelten erzeugten Lichtstrahls 91 verschwenkt. Infolgedessen empfängt die Monitordiode 29 (Empfänger 11) den reflektierten Lichtstrahl 93 insbesondere bei kurzen Distanzen zu den Werkstückflächen 1, 2 nicht exakt dann, wenn der abgestrahlte Lichtstrahl 92 senkrecht auf die Werkstückfläche 1,2 auftritt und exakt antiparallel zu seiner Abstrahlrichtung reflektiert wird. Vielmehr empfängt die Monitordiode 92 den reflektierten Lichtstrahl 93, wenn dieser unter einem geringfügig von 180° verschiedenen Winkel von einer der Werkstückflächen 1, 2 reflektiert wird. Dies stellt eine weitere vorrichtungsspezifische Fehlerursache für einen orientierungsabhängigen Fehler der ermittelten Abstrahlwinkel α₁, α₂ dar.

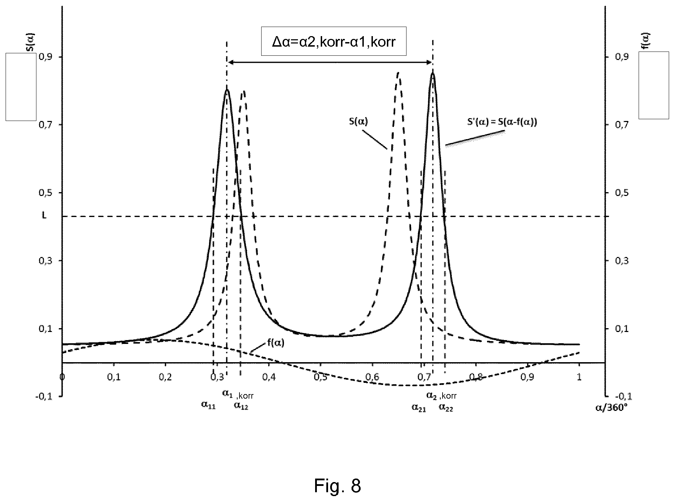

Die vorgeschlagene Winkelmessvorrichtung 200 weist, wie vorstehend beschrieben, eine Kalibriereinheit 15 auf, die zum Bestimmen von Kalibrierparametern eingerichtet ist, eine Speichereinheit 16, die zum Speichern der Kalibrierparameter und eines Fehlermodells eingerichtet ist, und eine Auswerteeinheit 17 und/oder eine Abstrahlwinkel-Korrektureinheit 18, die dazu eingerichtet ist, die ermittelten Abstrahlwinkel α₁, α₂ anhand des Fehlermodells und der Kalibrierparameter zu korrigieren, um korrigierte Abstrahlwinkel α_{1,korr}, α_{2,korr} zu ermitteln und den Winkel ϕ als Funktion der korrigierten Abstrahlwinkel α_{1,korr}, α_{2,korr} zu bestimmen. Nachstehend werden anhand der Figuren 8 bis 11 ein Fehlermodell und Verfahrensschritte zum Kalibrieren der Winkelmessvorrichtung 200 näher beschrieben.

Fig. 8 zeigt eine Auftragung eines Signalverlaufs S(α) des Empfängers 11, eines Fehlermodells f(α) und eines korrigierten Signalverlaufs S'(α) des Empfängers 11 in Abhängigkeit von dem Abstrahlwinkel α des abgestrahlten Lichtstrahls 92.

Der lang gestrichelte Signalverlauf S(α) stellt den tatsächlichen Signalverlauf des Empfängers 11 in Abhängigkeit von einem von der Abstrahlwinkelgebereinheit18 ermittelten, fehlerbehafteten Abstrahlwinkel α dar. Die kurz gestrichelte Linie ist eine Auftragung eines sinusoidalen Fehlermodells f(α), bei dem es sich um eine mathematische Funktion handelt, die einem ermittelten, fehlerbehafteten Abstrahlwinkel α einen modellierten Betrag des Fehlers f(α) zuordnet.

Das Fehlermodell kann beispielsweise in Form von Anweisungen in der Speichereinheit 26 gespeichert sein, wobei die Anweisungen, wenn sie von der Verarbeitungseinheit 24 ausgelesen und ausgeführt werden, die Verarbeitungseinheit 24 dazu veranlassen, die mathematische Funktion f(α) auszuwerten. Alternativ hierzu kann ein Abschnitt der Speichereinheit 26, in dem das Fehlermodell f(α) gespeichert ist, als fest verdrahtete Schaltung ausgebildet sein. Die Funktion f(α) kann alternativ und näherungsweise auch in Form einer Wertetabelle im Speicher hinterlegt sein.

Der durchgezogen dargestellte Signalverlauf S'(α) stellt einen korrigierten Signalverlauf S'(α)=S(α-f(α)) dar. Das heißt, S'(α) ist eine Auftragung des Signals des Empfängers 11 in Abhängigkeit eines um den mit dem Fehlermodell f(α) modellierten Fehler korrigierten Abstrahlwinkels αₖₒᵣᵣ = α-f(α). Dementsprechend sind die beiden Maxima des korrigierten Signalverlaufs S'(α) in der Horizontalen um den Betrag des in der Vertikalen aufgetragenen Fehlers f(α) verschoben.

Unter der theoretischen Annahme, dass das Fehlermodell f(α) den von den vorrichtungsspezifischen Fehlerursachen versachten Winkelfehler der ermittelten Abstrahlwinkel α exakt modelliert, handelt es sich bei der anhand der Maxima des korrigierten Signalverlaufs S'(α) ermittelten Abstrahlwinkeldifferenz Δα= α_{2,korr}- Δ_{α1,korr} um diejenige Abstrahlwinkeldifferenz, deren Verwendung durch die Auswerteeinheit 17 zur Bestimmung des tatsächlichen korrekten Winkels ϕ führt. In der Praxis sind Varianten denkbar, in denen das Fehlermodell f(a) den tatsächlichen Fehler näherungsweise modelliert und somit die Genauigkeit der Bestimmung des Winkels ϕ mindestens verbessert.

In Fig. 8 ist die korrigierte Abstandswinkeldifferenz Δα größer als die unkorrigierte Abstandswinkeldifferenz der gestrichelten Maxima, weil das erste Maximum des korrigierten Signalverlaufs S'(α) weiter links als das Maximum des ermittelten Signalverlaufs S(α) liegt, während das zweite Maximum weiter rechts liegt. Man sieht jedoch, dass bei anderen Absolutwerten des Abstrahlwinkels α an anderen Orten des Verlaufs von f(α) eine korrigierte Abstandswinkeldifferenz Δα auch kleiner sein könnte als eine unkorrigierte Abstandswinkeldifferenz. Mit anderen Worten oszilliert die Abweichung der ermittelten von den korrigierten Abstandswinkeldifferenzen Δα ebenso wie die Abweichung der ermittelten von den korrigierten Abstandswinkeln α sinusoidal um einen Nullpunkt. Anders ausgedrückt würde die Winkelmessvorrichtung 200, wenn sie das Fehlermodell f(α) unberücksichtigt lässt, unterschiedliche Winkel ϕ bestimmen, die um den tatsächlichen Winkel ϕ sinusoidal oszillieren, je nachdem, wie die Winkelmessvorrichtung 200 gegenüber den Werkstückflächen 1, 2 orientiert ist.

Um den gewünschten Effekt einer Verbesserung der Messgenauigkeit einer insbesondere berührungslosen Winkelmessvorrichtung 100, 200 zu erreichen, werden erfindungsgemäβ bei einem Kalibriervorgang Kalibrierparameter bestimmt (Schritt S10), bei denen es sich um Koeffizienten für das in der Speichereinheit 16 der Winkelmessvorrichtung 100, 200 gespeicherte Fehlermodell f(α) handelt. Mit Hilfe der Kalibrierparameter wird das Fehlermodell f(α) an die tatsächlichen vorrichtungsspezifischen Fehlerursachen angepasst.

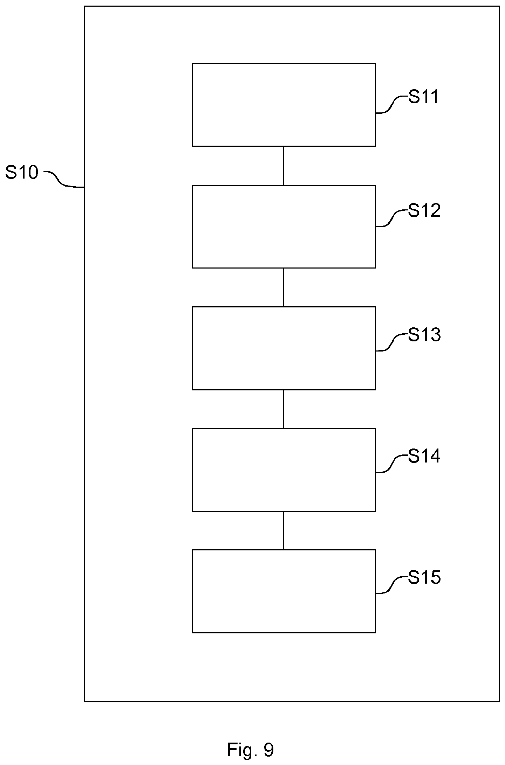

Der Kalibriervorgang, bei dem das Bestimmen der Kalibrierparameter erfolgt, wird im Folgenden anhand der Figuren 9 bis 11 beschrieben. Die Beschreibung erfolgt für das Handwinkelmessgerät 200, es besteht jedoch keine Einschränkung in dieser Hinsicht.

Fig. 9 veranschaulicht die einzelnen Schritte S11 bis S15 des Schritts S10 zum Bestimmen der Kalibrierparameter gemäß einem vorgeschlagenen Verfahren.

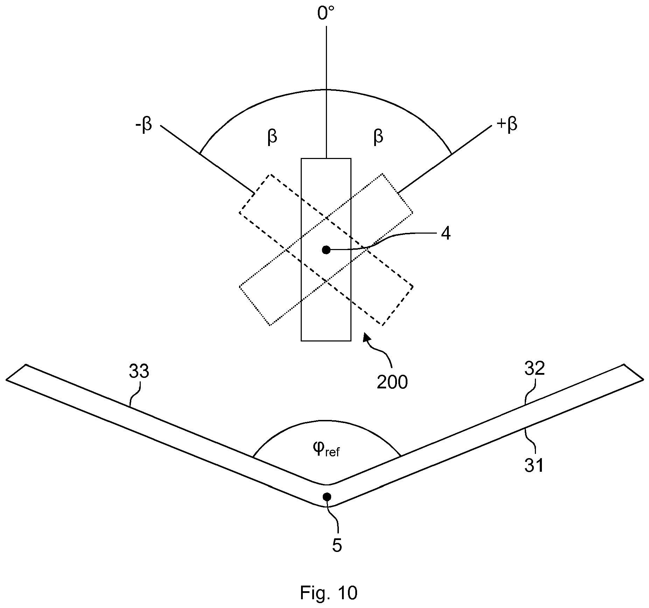

Fig. 10 zeigt eine Skizze zur Veranschaulichung eines Kalibriervorgangs einer Winkelmessvorrichtung, wie des Handwinkelmessgeräts 200.

Der Kalibriervorgang beginnt, indem von einem Bediener ein Kalibrierwinkelstück 31 bereitgestellt wird (Schritt S11), das zwei ebene Flächen 31, 32 aufweist, die einen unveränderlichen Kalibrierwinkel ϕ_{ref} einschließen, und das Handwinkelmessgerät 200 derart angeordnet wird, dass die Rotationsachse 4 des Richtrotors 3 im Wesentlichen achsparallel zu der Scheitelachse 5 des Kalibrierwinkels ϕ_{ref} angeordnet ist (Schritt S12).

Der Bediener kann den Beginn des Kalibriervorgangs beispielsweise durch Betätigen einer Taste des Tastenfelds 34 des Handwinkelmessgeräts 200 an die Kalibriereinheit 15 der Verarbeitungseinheit 24 signalisieren.

Anschließend verschwenkt (Schritt S13) der Bediener das Handwinkelmessgerät 200 im Wesentlichen um die Rotationsachse 4 des Richtrotors 3 zwischen den drei Schwenkpositionen -β, 0°, +β.

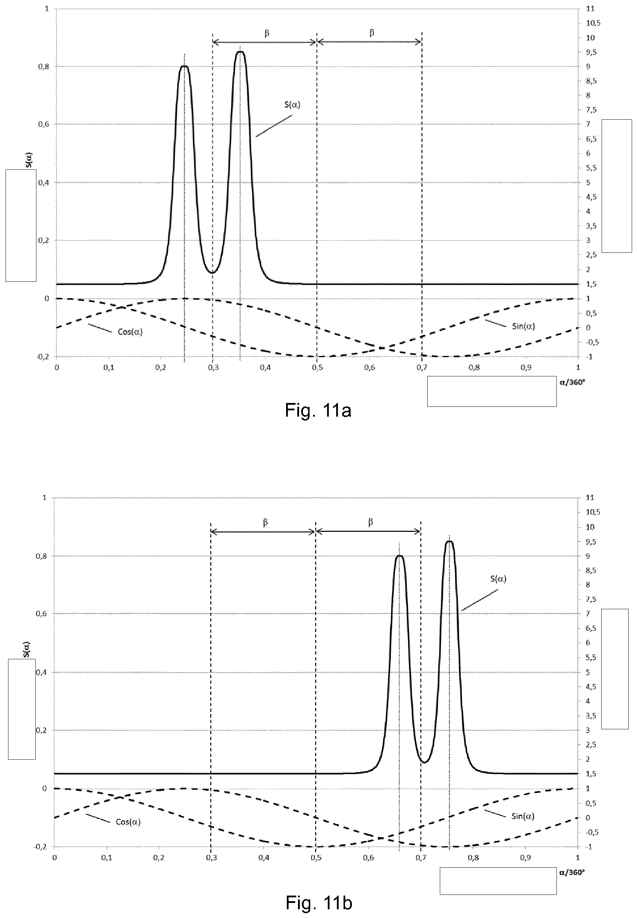

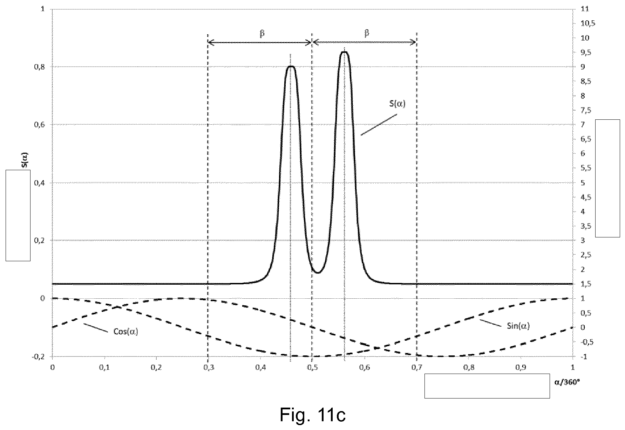

Fig. 11a zeigt den Signalverlauf S(α) des Empfängers 11 während des Verschwenkens an einer Schwenkposition -β (gestrichelt dargestelltes Handwinkelmessgerät 200 in Fig. 10), Fig. 11b zeigt den Signalverlauf S(α) des Empfängers 11 während des Verschwenkens an einer Schwenkposition + β (gepunktet dargestelltes Handwinkelmessgerät 200 in Fig. 10) und Fig. 11c zeigt den Signalverlauf S(α) des Empfängers 11 an einer Schwenkposition 0° (durchgezogen dargestelltes Handwinkelmessgerät 200 in Fig. 10).

Wie den Figuren 11a - 11c zu entnehmen ist, stellt die Schwenkposition β ein Offset für die Absolutwerte der jeweiligen ermittelten Abstrahlwinkel α_{1,2} dar, bei denen der Empfänger 11 den reflektierten Lichtstrahl 93 empfängt und Maxima des Signalverlaufs S(α) auftreten, während die Abstände zwischen den Abstrahlwinkeln α_{1,2} in den Figuren 11a - 11c jeweils im Wesentlichen gleich sind, d.h. gleich bis auf durch die vorrichtungsspezifischen Fehlerursachen bedingte Abweichungen.

Während des Verschwenkens veranlasst die Kalibriereinheit 15 die Verarbeitungseinheit 24 dazu, mittels der Auswerteeinheit 17 wiederholt und insbesondere bei jeder der drei Schwenkpositionen -β, 0°, +β den Kalibrierwinkel ϕ_{ref} zu bestimmen (S14), wozu wiederholt die Schritte S20 bis S25 des in Fig. 2 veranschaulichten Verfahrens durchgeführt werden. Die Kalibrierparameter können dabei zu null initialisiert sein oder es kann auf andere Weise durch ein Flag oder dergleichen veranlasst werden, dass das Fehlermodell zunächst ohne Berücksichtigung bleibt.

Wie vorstehend beschrieben, kann es aufgrund der vorrichtungsspezifischen Fehlerursachen zu Abweichungen der ermittelten Abstrahlwinkel α₁, α₂, bei denen der Empfänger 11 den reflektierten Lichtstrahl 93 empfängt, von den theoretischen in einem fehlerfreien Fall ermittelten Abstrahlwinkeln α₁, α₂ führen, so dass sich bei jeder der drei Schwenkpositionen -β, 0°, +β unterschiedliche Bestimmungsergebnisse für den Kalibrierwinkel ϕ_{ref} ergeben.

In Schritt S15 bestimmt die Kalibriereinheit 15 die Kalibrierparameter derart, dass eine Abweichung der Bestimmungen für den Kalibrierwinkel ϕ_{ref} bei den Schwenkpositionen -β, 0°, +β minimiert wird, wenn die Bestimmungen unter Berücksichtigung des Fehlermodells f(α) und der Kalibrierparameter erfolgt.

In einem Ausführungsbeispiel handelt es sich bei dem Fehlermodell f(α) um eine Linearkombination der Sinus- und der Cosinusfunktion des Abstrahlwinkels α: f(α) = kₛ sin(α) + k_{c} cos(α). Die Sinus- und die Cosinusfunktion sind in den Figuren 11a bis 11c schematisch gestrichelt dargestellt. Wie anhand von Fig. 8 bereits erläutert wurde, können durch ein sinusoidales Fehlermodell f(α) die Maxima des korrigierten Signalverlaufs S'(α) gegenüber den Maxima des ursprünglichen Signalverlaufs S(α) verschoben werden, d.h., der Abstand zwischen den Maxima kann je nach Absolutwert des jeweiligen Abstrahlwinkels α enger oder breiter gemacht werden. Die Kalibiereinheit 15 bestimmt somit die Kalibrierparameter bzw. Koeffizienten kₛ und k_{c} derart, dass der Abstand zwischen den in den Fig. 11a bis 11c jeweils gezeigten Maxima in den Signalverläufen für jede der Schwenkpositionen so weit wie möglich ausgeglichen wird. Es versteht sich, dass durch Variation der Koeffizienten kₛ und k_{c} jede beliebige Amplitude und Phasenlage des sinusoidalen Fehlermodells f(α) dargestellt werden kann.

Die Kalibiereinheit 15 kann die Kalibrierparameter, bei denen die Abweichung zwischen den Bestimmungen des Kalibrierwinkels ϕ_{ref} minimiert wird, auf rechnerischem Wege bestimmen, oder sie kann ein numerisches Verfahren einsetzen, bei dem die Kalibriereinheit 15 einen Koordinatenraum kₛ, k_{c} durchiteriert und für jeden bei der Iteration durchlaufenden Punkt kₛ, k_{c} für jede der Schwenkpositionen -β, 0°, +β eine wiederholte Bestimmung des Kalibrierwinkels ϕ_{ref} unter Berücksichtigung des Fehlermodells f(α) mit den jeweiligen Werten für die Kalibrierparameter kₛ, k_{c} veranlasst. Hierbei kann lediglich die rechnerische Bestimmung des Kalibrierwinkels ϕ_{ref} mit den jeweiligen Werten für die Kalibrierparameter kₛ, k_{c} wiederholt werden, sofern die ermittelten Abstrahlwinkel α₁, α₂ für jede der Schwenkpositionen -β, 0°, +β beispielsweise in der Speichereinheit 16 zwischengespeichert worden sind, oder es kann jeweils eine neue Messung gemäß den Schritten S21 bis S25 des Verfahrens aus Fig. 2 durchgeführt werden. Beim Iterieren durch den Koordinatenraum kann sich die Kalibriereinheit 15 beispielsweise mittels der Konjugierte-Gradienten-Methode denjenigen Kalibrierparametern kₛ, k_{c} nähern, für die die Abweichung der Bestimmungen für den Kalibrierwinkel ϕ_{ref} für jede der Schwenkpositionen -β, 0°, +β minimiert wird.

In einer Variante wird die Schwenkposition β = 0° derart gewählt, dass die Referenzrichtung, bei welcher ein Abstrahlwinkel α zu 0° bestimmt wird, im Wesentlichen mit der Winkelhalbierenden des Kalibrierwinkels ϕ_{ref} zusammenfällt. In dieser Variante wird der Parameter kₛ zu null gesetzt, und der Kalibrierparameter k_{c} wird rechnerisch oder iterativ numerisch derart bestimmt, dass eine Abweichung zwischen den Bestimmungen für den Kalibrierwinkel ϕ_{ref} bei den Schwenkpositionen -β und +β minimiert wird. Anschließend wird bei festem Kalibierparameter k_{c} der Kalibrierparameter kₛ rechnerisch oder iterativ numerisch derart bestimmt, dass eine Abweichung zwischen den Bestimmungen für den Kalibrierwinkel ϕ_{ref} bei den Schwenkpositionen -β, 0° und +β minimiert wird. Auf diese Weise wird vorteilhafterweise zweimal ein eindimensionaler Koordinatenraum durchlaufen, wodurch im Vergleich zu der Variante, bei der ein zweidimensionaler Koordinatenraum durchlaufen wird, Rechenzeit eingespart werden kann.

In einer Weiterbildung kann, wenn bei Schritt S15 die minimale erreichte Abweichung der Bestimmungen für den Kalibrierwinkel ϕ_{ref} bei den Schwenkpositionen -β, 0° und +β einen vorgegebenen Maximalwert nicht unterschreitet, die Kalibriereinheit 15 ein präziseres Fehlermodell bestimmen und in der Speichereinheit 16 speichern, welches beispielsweise zusätzlich eine Linearkombination von Sinus- und Cosinusfunktionen ganzzahliger Vielfacher des Abstrahlwinkels α mit zugehörigen Koeffizienten als Kalibrierparameter umfasst, und Schritt S15 wird erneut durchgeführt, wobei die ursprünglichen und die zusätzlichen Koeffizienten derart bestimmt werden, dass die Abweichung der Bestimmungen des Kalibrierwinkels ϕ_{ref} minimiert wird. In einer bevorzugten Weiterbildung umfasst das präzisere Fehlermodell Linearkombination von Sinus- und Cosinusfunktion des Dreifachen des Abstrahlwinkels α. Ein solches Fehlermodell erlaubt die Korrektur von Fehlerursachen, wie starken Rastmomenten des Motors 6, welche in einem Winkelabstand entsprechend der ausgeführten magnetischen Phasen auftreten.

Nachdem in Schritt S15 ein geeignetes Fehlermodell f(α) und geeignete Kalibrierparameter kₛ, k_{c}, ... bestimmt wurden, werden diese in Schritt S16 in der Speichereinheit 16 des Handwinkelmessgeräts 200 gespeichert.

Der Kalibriervorgang ist damit abgeschlossen. Es sei angemerkt, dass eine Kenntnis des Kalibrierwinkels ϕ_{ref} für die Durchführung des beschriebenen Kalibriervorgangs nicht erforderlich ist. Die Kalibrierung erfolgt durch ein einfaches Verschwenken des Handwinkelmessgeräts 200 zwischen drei Schwenkpositionen Schwenkpositionen -β, 0°, +β innerhalb des Kalibierwinkelstücks 32 ohne Eingabe weiterer Parameter.

Das kalibrierte Handwinkelmessgerät 200 kann benutzt werden, um einen Winkel ϕ zwischen zwei ebenen Flächen 1, 2 zu bestimmen, wobei, da in Schritt S25 des in Fig. 2 veranschaulichten Winkelbestimmungsverfahrens das Fehlermodell f(α) und die Kalibrierparameter kₛ, k_{c}, ... aus der Speichereinheit 16 berücksichtigt werden, das Handwinkelmessgerät 200 einen zu bestimmenden Winkel ϕ näherungsweise unabhängig von der relativen Orientierung des Handwinkelmessgeräts 200 gegenüber den ebenen Flächen 1, 2 bestimmen kann. Somit streuen die Messergebnisse weniger, und die Messgenauigkeit des Handwinkelmessgeräts 200 ist im Vergleich zu einem nicht kalibrierten Handwinkelmessgerät ohne die vorgeschlagene Kalibriereinheit 15, Speichereinheit 16 und Abstrahlwinkel-Korrektureinheit 18 verbessert. Dank der Kalibrierung kann eine gute Messgenauigkeit auch dann erreicht werden, wenn das Handwinkelmessgerät 200 keinen Winkelgeber, keinen Diagonalspiegel im Strahlengang und stark miniaturisierte Bauteile aufweist, deren exakte Justierung aufwändig und kostspielig oder unmöglich ist. So kann eine Miniaturisierung des Handwinkelmessgeräts 200 und eine Senkung der Entwicklungs- und Herstellungskosten erzielt werden. Das Durchführen der Kalibrierung kann von Hand durch einen Benutzer durch einfaches Verschwenken des Handwinkelmessgeräts 200 erfolgen.

Obwohl die vorliegende Erfindung anhand von Ausführungsbeispielen beschrieben wurde, ist sie vielfältig modifizierbar.

Beispielsweise kann beim ersten Ausführungsbeispiel der Winkelgeber 9 weggelassen werden, und die Ermittlung der Abstrahlwinkel α kann wie beim zweiten Ausführungsbeispiel zeitbasiert erfolgen. Aufgrund der in Fig.1 gezeigten Anordnung des ersten Ausführungsbeispiels, bei welcher die Reflexionsfläche 8 orthogonal zu der Ausbreitungsrichtung des erzeugten Lichtstrahls 91 angeordnet ist, kann hierbei besonders vorteilhafterweise auch der Referenzsignalgeber 20 weggelassen werden, und das Referenzsignal kann stattdessen anhand des Signals des Empfängers S11 ermittelt werden, das dieser ausgibt, wenn der reflektierte Lichtstrahl 93 bei einer in Fig. 1 horizontalen Drehstellung des Richtrotors den Empfänger S11 überstreicht, ohne zuvor zu einer der Werkstückflächen 2, 3 gelaufen zu sein.

Anstelle einer Linearkombination von Sinus- und Cosinusfunktionen mit den Koeffizienten als Kalibrierparameter kann als Fehlermodell f(α) auch nur eine Sinusfunktion oder nur eine Cosinusfunktion mit den Kalibrierparametern Amplitude und Phasenlage gewählt werden. Es können je nach zu modellierendem Fehler auch andere orthogonale trigonometrische oder sonstige Funktionen für das Fehlermodell f(α) gewählt werden.

Der Kalibriervorgang, welcher die Schritte S11 bis S15 der Verfahrensstufe S1 zum Bestimmen und Speichern der Kalibrierparameter des vorgeschlagenen Winkelbestimmungsverfahrens umfasst, wurde beispielhaft anhand des Handwinkelmessgeräts 200 beschrieben, wobei die Schritte im Zusammenspiel zwischen einem Bediener, der das Handwinkelmessgerät 200 verschwenkt, und einer automatisierten Kalibriereinheit 15, welche die Kalibrierparameter kₛ, k_{c} anhand der an den Schwenkpositionen -β, 0°, + β ermittelten Abstrahlwinkel α₁, α₂ bestimmt, durchgeführt wurden. Der Kalibriervorgang kann jedoch auch vollkommen automatisch erfolgen, wobei eine externe Vorrichtung eine Winkelmessvorrichtung 100, 200 verschwenkt. Der Kalibriervorgang kann ebenso vollständig manuell erfolgen, wobei ein Bediener beispielsweise ein Handwinkelmessgerät 200 verschwenkt, und anhand der jeweiligen angezeigten Ergebnisse der Bestimmung des Kalibrierwinkels ϕ_{ref} geeignete Kalibrierparameter kₛ, k_{c}, ... und/oder ein geeignetes Fehlermodell f(α) bestimmt und über eine beispielsweise aus der in Fig. 5 gezeigten Anzeigeeinheit 23 und dem in Fig. 5 gezeigten Tastenfeld 34 gebildete Benutzerschnittstelleneinheit in das Handwinkelmessgerät 200 eingibt bzw. unter mehreren angebotenen Optionen ein gewünschtes Fehlermodell f(α) und/oder Kalibrierparameter kₛ, k_{c}, ... auswählt.

Die für den Kalibriervorgang verwendeten Schwenkpositionen sind nicht auf die Schwenkpositionen -β, 0°, +β eingeschränkt, und es können beliebige und beliebig viele Schwenkpositionen verwendet werden.

### BEZUGSZEICHENLISTE

- 100, 200: Vorrichtung zum Bestimmen eines Winkels
- 1, 2: Werkstückfläche
- 3: Richtrotor
- 4: Rotationsachse
- 5: Scheitelachse
- 6: Motor
- 7: Welle
- 8: Reflexionsfläche
- 9: Winkelgeber
- 10: Sender
- 11: Empfänger
- 12: Werkstück
- 13: Stempel
- 14: Matrize
- 15: Kalibriereinheit
- 16: Speichereinheit
- 17: Auswerteeinheit
- 18: Abstrahlwinkelgebereinheit
- 19: Kollimationsoptik
- 20: Referenzsignalgeber
- 21: Zeitgeber
- 22: Abstrahlwinkel-Korrektureinheit
- 23: Anzeigeeinheit
- 24: Verarbeitungseinheit
- 25: Glasfenster
- 26: Kapsel
- 27: Zentrumsachse des Sichtfelds der Monitordiode
- 28: Laserchip
- 29: Monitordiode
- 30: Basis
- 31: Kalibrierwinkelstück
- 32, 33: ebene Flächen
- 34: Bedienelement
- 35: Achse des erzeugten Lichtstrahls
- 91: erzeugter Lichtstrahl
- 92: abgestrahlter Lichtstrahl
- 93: reflektierter Lichtstrahl
- ϕ: zu bestimmender Winkel
- ϕ_{cal}: Kalibrierwinkel
- ω: Drehstellung des Richtrotors
- α: Abstrahlwinkel des abgestrahlten Lichtstrahls
- f(α): Fehlermodell
- -β, 0°, +β: Schwenkpositionen
- S1, S2: Verfahrensstufen
- S10 ... S25: Verfahrensschritte

## Patentansprüche

1. Vorrichtung (100, 200) zum Bestimmen eines Winkels (ϕ) zwischen zwei Werkstückflächen (1, 2) mit:
einem Sender (10) zum Erzeugen eines Lichtstrahls (91),
einem kontinuierlich umlaufenden Richtrotor (3) zum Abstrahlen des erzeugten Lichtstrahls (91) in einer umlaufenden, zu einer Rotationsachse (4) des Richtrotors (3) senkrechten Abstrahlrichtung als abgestrahlter Lichtstrahl (92),
einem Empfänger (11) zum Empfangen eines reflektierten Lichtstrahls (93), wenn die Rotationsachse (4) des Richtrotors (3) achsparallel zu einer Scheitelachse (5) des Winkels (ϕ) angeordnet ist und der abgestrahlte Lichtstrahl (92) von einer der zwei Werkstückflächen (1, 2) antiparallel zu der Abstrahlrichtung reflektiert wird,
einer Abstrahlwinkelgebereinheit (18) zum Ermitteln jeweiliger Abstrahlwinkel (α₁, α₂) des abgestrahlten Lichtstrahls (92), bei denen der Empfänger (11) den reflektierten Lichtstrahl (93) empfängt,
**gekennzeichnet durch**
eine Kalibriereinheit (15) zum Bestimmen mindestens von Kalibrierparametern, eine Speichereinheit (16) zum Speichern der Kalibrierparameter und eines Fehlermodells (f(α)), wobei die Kalibrierparameter Koeffizienten einer mathematischen Funktion des Fehlermodells sind, das Fehlermodell einen winkelabhängigen Fehler des von der Abstrahlwinkelgebereinheit ermittelten Abstrahlwinkels beschreibt und der winkelabhängige Fehler eine vorrichtungsspezifische Fehlerursache aufweist,
und
eine Auswerteeinheit (17), die dazu eingerichtet ist, den Winkel (ϕ) als Funktion der ermittelten Abstrahlwinkel (α₁, α₂) des von dem Richtrotor (3) abgestrahlten Lichtstrahls (92), der gespeicherten Kalibrierparameter und des gespeicherten Fehlermodells (f(α)) zu bestimmen.

2. Vorrichtung nach Anspruch 1,
**dadurch gekennzeichnet,**
**dass** der Richtrotor (3) eine ebene Reflexionsfläche (8) für den von dem Sender (10) erzeugten Lichtstrahl (91) bildet.

3. Vorrichtung nach Anspruch 1 oder 2,
**dadurch gekennzeichnet,**
**dass** der Sender (10) eine Monitordiode (29) aufweist und die Monitordiode (29) den Empfänger (11) bildet.

4. Vorrichtung nach einem der Ansprüche 1 bis 3,
**gekennzeichnet durch**
einen Zeitgeber (21), der dazu eingerichtet ist, ein getaktetes Zeitsignal an die Abstrahlwinkelgebereinheit (18) auszugeben.

5. Vorrichtung nach einem der Ansprüche 1 bis 4,
**gekennzeichnet durch**
einen Referenzsignalgeber (20), der dazu eingerichtet ist, ein Referenzsignal an die Abstrahlwinkelgebereinheit (18) auszugeben, wenn der abgestrahlte Lichtstrahl (92) von dem Richtrotor (3) in einer Referenzrichtung abgestrahlt wird.

6. Vorrichtung nach einem der Ansprüche 1 bis 5,
**gekennzeichnet durch**
eine Abstrahlwinkel-Korrektureinheit (22) zum Bestimmen korrigierter Abstrahlwinkel (α_{korr,1}, α_{korr,2}) des von dem Richtrotor (3) abgestrahlten Lichtstrahls (92) durch Korrigieren der ermittelten Abstrahlwinkel (α₁, α₂) des von dem Richtrotor (3) abgestrahlten Lichtstrahls (92) unter Verwendung des Fehlermodells (f(α)) und der Kalibrierparameter,
wobei die Auswerteeinheit (17) dazu eingerichtet ist, den Winkel (ϕ) als Funktion der korrigierten Abstrahlwinkel (α_{korr,1}, α_{korr,2}) zu bestimmen.

7. Vorrichtung nach einem der Ansprüche 1 bis 6,
**dadurch gekennzeichnet,**
**dass** das Fehlermodell (f(α)) ein sinusoidales Fehlermodell ist.

8. Vorrichtung nach einem der Ansprüche 1 bis 7,
**dadurch gekennzeichnet,**
**dass** das Fehlermodell (f(α)) eine Linearkombination orthogonaler Funktionen eines Abstrahlwinkels des von dem Richtrotor (3) abgestrahlten Lichtstrahls (92) umfasst und die Kalibrierparameter Koeffizienten der Linearkombination umfassen.

9. Vorrichtung nach Anspruch 8,
**dadurch gekennzeichnet,**
**dass** die orthogonalen Funktionen eine Sinusfunktion und eine Cosinusfunktion von einem jeweiligen ganzzahligen Vielfachen und/oder einem jeweiligen ganzzahligen Bruch des Abstrahlwinkels des von dem Richtrotor (3) abgestrahlten Lichtstrahls (92) umfassen.

10. Vorrichtung nach einem der Ansprüche 1 bis 9,
**dadurch gekennzeichnet,**
**dass** die Kalibriereinheit (15) dazu eingerichtet ist, bei einem Kalibriervorgang, bei dem die Rotationsachse (4) des Richtrotors (3) achsparallel zu einer Scheitelachse (5) eines Winkels (ϕ_{ref}) zwischen zwei ebenen Flächen (32, 33) eines Kalibrierwinkelstücks (31) angeordnet ist und mindestens eine Anordnung aus dem Sender (10), dem Richtrotor (3) und dem Empfänger (11) durch einen Bediener oder eine externe Vorrichtung um die Rotationsachse (4) des Richtrotors (3) zwischen mehreren Schwenkpositionen (-β, 0°, +β) verschwenkt und an jeder der Schwenkpositionen (-β, 0°, +β) der Winkel (ϕ_{ref}) zwischen den ebenen Flächen (32, 33) des Kalibrierwinkelstücks (31) bestimmt wird, die Kalibrierparameter derart zu bestimmen, dass eine Abweichung der Bestimmungen des Winkels (ϕ_{ref}) zwischen den ebenen Flächen (32, 33) des Kalibrierwinkelstücks (31) an den jeweiligen Schwenkpositionen (-β, 0°, +β) voneinander verkleinert oder minimiert wird, und die bestimmten Kalibrierparameter in der Speichereinheit (16) zu speichern.

11. Vorrichtung nach Anspruch 10,
**dadurch gekennzeichnet,**
**dass** die mehreren Schwenkpositionen (-β, 0°, +β) eine jeweilige äußerste Position (-β, +β) und eine mittlere Position (0°) eines Schwenkbereichs umfassen und der Schwenkbereich mindestens 30° umfasst.

12. Vorrichtung nach Anspruch 10 oder 11,
**dadurch gekennzeichnet,**
**dass** die Kalibriereinheit (15) dazu eingerichtet ist, bei dem Kalibriervorgang weiterhin das Fehlermodell (f(α)) derart zu bestimmen, dass die Abweichung der Bestimmungen des Winkels (ϕ_{ref}) zwischen den ebenen Flächen (31, 32) des Kalibrierwinkelstücks (31) an den jeweiligen Schwenkpositionen (-β, 0°, +β) voneinander verkleinert oder minimiert wird, und das bestimmte Fehlermodell (f(α)) in der Speichereinheit (16) zu speichern.

13. Vorrichtung nach einem der Ansprüche 10 bis 12,
**dadurch gekennzeichnet,**
**dass** die Kalibriereinheit (15) dazu eingerichtet ist, die Kalibrierparameter durch ein iteratives numerisches Verfahren zu bestimmen.

14. Vorrichtung nach einem der Ansprüche 1 bis 13,
**gekennzeichnet durch**
ein Bedienelement (34), das dazu eingerichtet ist, der Kalibriereinheit (15) ein Durchführen des Kalibriervorgangs zu signalisieren, wenn ein Bediener das Bedienelement (34) betätigt.

15. Vorrichtung nach einem der Ansprüche 1 bis 14,
**gekennzeichnet durch**
eine Benutzerschnittstelleneinheit (23, 34), die dazu eingerichtet ist, einem Bediener ein manuelles Auswählen des Fehlermodells (f(α)) und/oder ein manuelles Festlegen der Kalibrierparameter zu ermöglichen.

16. Vorrichtung nach einem der Ansprüche 1 bis 15,
**dadurch gekennzeichnet,**
**dass** die Vorrichtung als Handwinkelmessgerät (200) mit einer Anzeigeeinheit (23) zum Anzeigen des Winkels (ϕ) ausgebildet ist.

17. Verfahren zum Bestimmen eines Winkels (ϕ) zwischen zwei Werkstückflächen (1, 2) mit:
Erzeugen (S21) eines Lichtstrahls (91) mittels eines Senders (10),
Abstrahlen (S22) des erzeugten Lichtstrahls (91) mittels eines kontinuierlich umlaufenden Richtrotors (3) in einer umlaufenden, zu einer Rotationsachse (4) des Richtrotors (3) senkrechten Abstrahlrichtung als abgestrahlter Lichtstrahl (92),
Empfangen (S23) eines reflektierten Lichtstrahls (93) mittels eines Empfängers (11), wenn die Rotationsachse (4) des Richtrotors (3) achsparallel zu einer Scheitelachse (5) des Winkels (ϕ) angeordnet ist und der abgestrahlte Lichtstrahl (92) von einer der zwei Werkstückflächen (1, 2) antiparallel zu der Abstrahlrichtung als reflektierter Lichtstrahl (93) reflektiert wird,
Ermitteln (S24) jeweiliger Abstrahlwinkel (α₁, α₂) des von dem Richtrotor (3) abgestrahlten Lichtstrahls, bei denen der Empfänger (11) den reflektierten Lichtstrahl (93) empfängt,
**gekennzeichnet durch**
Bestimmen (S10) mindestens von Kalibrierparametern,
Speichern (S16) der Kalibrierparameter und eines Fehlermodells (f(α)), wobei die Kalibrierparameter Koeffizienten einer mathematischen Funktion des Fehlermodells sind, das Fehlermodell einen winkelabhängigen Fehler des von der Abstrahlwinkelgebereinheit ermittelten Abstrahlwinkels beschreibt und der winkelabhängige Fehler eine vorrichtungsspezifische Fehlerursache aufweist,
und
Bestimmen (S25) des Winkels (ϕ) als Funktion der ermittelten Abstrahlwinkel (α₁, α₂) des von dem Richtrotor (3) abgestrahlten Lichtstrahls (92), der gespeicherten Kalibrierparameter und des gespeicherten Fehlermodells (f(α)).

18. Verfahren nach Anspruch 17,
**gekennzeichnet durch**
Bereitstellen (S11) eines Kalibrierwinkelstücks (31) mit zwei ebenen Flächen (31, 32), die einen Winkel (ϕ_{ref}) einschließen,
Anordnen (S12) der Rotationsachse (4) des Richtrotors (3) achsparallel zu der Scheitelachse (5) des Winkels (ϕ_{ref}) zwischen den ebenen Flächen (1, 2) des Kalibrierwinkelstücks (31),
Verschwenken (S13) einer Anordnung, welche mindestens den Sender (10), den Richtrotor (3) und den Empfänger (11) umfasst, um die Rotationsachse (4) des Richtrotors (3) zwischen mehreren Schwenkpositionen (-β, 0°, +β),
Bestimmen (S14) des Winkels (ϕ_{ref}) zwischen den ebenen Flächen (31, 32) des Kalibrierwinkelstücks (31) an jeder der Schwenkpositionen (-β, 0°, +β) und Bestimmen (S15) der Kalibrierparameter und/oder des Fehlermodells (f(α)) derart, dass eine Abweichung der Bestimmungen des Winkels (ϕ_{ref}) zwischen den ebenen Flächen (31, 32) des Kalibrierwinkelstücks (31) an den jeweiligen Schwenkpositionen (-β, 0°, +β) voneinander verkleinert oder minimiert wird.

## Claims

1. A device (100, 200) for determining an angle (ϕ) between two workpiece surfaces (1, 2), comprising:
an emitter (10) for generating a light beam (91),
a continuously rotating straightening rotor (3) for radiating the generated light beam (91) in a rotating radiation direction perpendicular to a rotation axis (4) of the straightening rotor (3) as a radiated light beam (92),
a receiver (11) for receiving a reflected light beam (93) when the axis of rotation (4) of the straightening rotor (3) is arranged axially parallel to a vertex axis (5) of the angle (ϕ) and the radiated light beam (92) is reflected from one of the two workpiece surfaces (1, 2) antiparallel to the radiation direction,
a radiation angle sensor unit (18) for determining respective radiation angles (α₁, α₂) of the radiated light beam (92) at which the receiver (11) receives the reflected light beam (93),
**characterized by**
a calibration unit (15) for determining at least calibration parameters,
a storage unit (16) for storing the calibration parameters and an error model (f(α)), the calibration parameters being coefficients of a mathematical function of the error model, the error model describing an angle-dependent error of the radiation angle determined by the radiation angle sensor unit, the angle-dependent error having a device-specific error cause,
and
an evaluation unit (17) configured to determine the angle (ϕ) as a function of the determined radiation angles (α₁, α₂) of the light beam (92) emitted by the straightening rotor (3), the stored calibration parameters and the stored error model (f(α)).

2. The device according to claim 1,
**characterized in that**
the straightening rotor (3) forms a plane reflection surface (8) for the light beam (91) generated by the emitter (10).

3. The device according to claim 1 or 2,
**characterized in that**
the emitter (10) comprises a monitor diode (29) and the monitor diode (29) forms the receiver (11).

4. The device according to any one of claims 1 to 3,
**characterized by**
a timer (21) configured to output a clocked timing signal to the radiation angle sensor unit (18).

5. The device according to any one of claims 1 to 4,
**characterized by**
a reference signal generator (20) configured to output a reference signal to the radiation angle sensor unit (18) when the radiated light beam (92) is emitted from the straightening rotor (3) in a reference direction.

6. The device according to any one of claims 1 to 5,
**characterized by**
a radiation angle correction unit (22) for determining corrected radiation angles (α_{korr,1}, α_{korr,2}) of the light beam (92) radiated from the straightening rotor (3) by correcting the determined radiation angles (α₁, α₂) of the light beam (92) radiated from the straightening rotor (3) using the error model (f(α)) and the calibration parameters,
wherein the evaluation unit (17) is configured to determine the angle (ϕ) as a function of the corrected beam angles (α_{korr,1}, α_{korr,2}).

7. The device according to any one of claims 1 to 6,
**characterized in that**
the error model (f(α)) is a sinusoidal error model.

8. The device according to any one of claims 1 to 7,
**characterized in that**
the error model (f(α)) comprises a linear combination of orthogonal functions of a radiation angle of the light beam (92) radiated by the straightening rotor (3) and the calibration parameters comprise coefficients of the linear combination.

9. The device according to claim 8,
**characterized in that**
the orthogonal functions comprise a sine function and a cosine function of a respective integer multiple and/or a respective integer fraction of the radiation angle of the light beam (92) emitted by the straightening rotor (3).

10. The device according to any one of claims 1 to 9,
**characterized in that**
the calibration unit (15) is configured to, during a calibration operation in which the axis of rotation (4) of the straightening rotor (3) is axially parallel to a vertex axis (5) of an angle (ϕ_{ref}) between two plane surfaces (32, 33) of a calibration angle piece (31) and at least one assembly consisting of the emitter (10), the straightening rotor (3) and the receiver (11) is pivoted by an operator or an external device about the rotation axis (4) of the straightening rotor (3) between several pivoting positions (-β, 0°, +β) and at each of the pivoting positions (-β, 0°, +β) the angle (ϕ_{ref}) between the plane surfaces (32, 33) of the calibration angle piece (31) is determined, determine the calibration parameters in such a way such that a deviation of the determinations of the angle (ϕ_{ref}) between the plane surfaces (32, 33) of the calibration angle piece (31) from each other at the respective pivot positions (-β, 0°, +β) is reduced or minimized, and to store the determined calibration parameters in the storage unit (16).

11. The device according to claim 10,
**characterized in that**
the several pivot positions (-β, 0°, +β) comprise a respective outermost position (-β, +β) and a middle position (0°) of a pivot range, and the pivot range comprises at least 30°.

12. The device according to claim 10 or 11,
**characterized in that**
the calibration unit (15) is configured to further determine the error model (f(α)) during the calibration process such that the deviation of the determinations of the angle (ϕ_{ref}) between the plane surfaces (31, 32) of the calibration angle piece (31) from each other at the respective pivot positions (-β, 0°, +β) is reduced or minimized, and to store the determined error model (f(α)) in the storage unit (16).

13. The device according to any one of claims 10 to 12,
**characterized in that**
the calibration unit (15) is configured to determine the calibration parameters by an iterative numerical method.

14. The device according to any one of claims 1 to 13,
**characterized by**
an operating element (34) configured to signal the calibration unit (15) to perform the calibration process when an operator actuates the operating element (34).

15. The device according to any one of claims 1 to 14,
**characterized by**
a user interface unit (23, 34) configured to allow an operator to manually select the error model (f(α)) and/or to manually set the calibration parameters.

16. The device according to any one of claims 1 to 15,
**characterized in that**
the device is designed as a hand angle measuring device (200) with a display unit (23) for displaying the angle (ϕ).

17. A method for determining an angle (ϕ) between two workpiece surfaces (1, 2), comprising:
generating (S21) a light beam (91) by means of an emitter (10),
radiating (S22) the generated light beam (91) by means of a continuously rotating straightening rotor (3) in a rotating radiation direction perpendicular to a rotation axis (4) of the straightening rotor (3) as a radiated light beam (92),
receiving (S23) a reflected light beam (93) by means of a receiver (11) when the axis of rotation (4) of the straightening rotor (3) is arranged axially parallel to a vertex axis (5) of the angle (ϕ) and the radiated light beam (92) is reflected from one of the two workpiece surfaces (1, 2) antiparallel to the radiation direction as a reflected light beam (93),
determining (S24) respective radiation angles (α₁, α₂) of the light beam emitted by the straightening rotor (3) at which the receiver (11) receives the reflected light beam (93),
**characterized by**
determining (S10) at least calibration parameters,
storing (S16) the calibration parameters and an error model (f(α)), wherein the calibration parameters are coefficients of a mathematical function of the error model, the error model describes an angle-dependent error of the radiation angle determined by the radiation angle sensor unit, and the angle-dependent error has a device-specific cause of error,
and
determining (S25) the angle (ϕ) as a function of the determined radiation angles (α₁, α₂) of the light beam (92) emitted by the straightening rotor (3), the stored calibration parameters and the stored error model (f(α)).

18. The method according to claim 17,
**characterized by**
providing (S11) a calibration angle piece (31) having two flat surfaces (31, 32) enclosing an angle (ϕ_{ref}),
arranging (S12) the axis of rotation (4) of the straightening rotor (3) axially parallel to the vertex axis (5) of the angle (ϕ_{ref}) between the flat surfaces (1, 2) of the calibration angle piece (31),
pivoting (S13) an assembly comprising at least the emitter (10), the straightening rotor (3) and the receiver (11) about the axis of rotation (4) of the straightening rotor (3) between several pivoting positions (-β, 0°, +β),
determining (S14) the angle ((ϕ_{ref}) between the planar surfaces (31, 32) of the calibration angle piece (31) at each of the pivot positions (-β, 0°, +β), and
determining (S15) the calibration parameters and/or the error model (f(α)) such that a deviation of the determinations of the angle ((ϕ_{ref}) between the plane surfaces (31, 32) of the calibration angle piece (31) at the respective pivot positions (-β, 0°, +β) from each other is reduced or minimized.

## Revendications

1. Dispositif (100, 200) pour déterminer un angle (ϕ) entre deux surfaces de pièces (1, 2), comprenant :
un émetteur (10) pour générer un faisceau lumineux (91),
un rotor directeur (3) en rotation continue pour rayonner le faisceau lumineux généré (91) dans une direction de rayonnement rotatif perpendiculaire à un axe de rotation (4) du rotor directeur (3) sous la forme d'un faisceau lumineux rayonné (92),
un récepteur (11) pour recevoir un faisceau lumineux réfléchi (93) lorsque l'axe de rotation (4) du rotor directeur (3) est disposé parallèlement à un axe de sommet (5) de l'angle (ϕ) et que le faisceau lumineux rayonné (92) est réfléchi par l'une des deux surfaces de la pièce (1, 2) antiparallèlement à la direction de rayonnement,
une unité de capteur d'angle de rayonnement (18) pour déterminer les angles de rayonnement respectifs (α₁, α₂) du faisceau de lumière rayonnée (92) auxquels le récepteur (11) reçoit le faisceau de lumière réfléchie (93),
**caractérisé par**
une unité de calibration (15) pour déterminer au moins des paramètres de calibration,
une unité de mémoire (16) pour stocker les paramètres de calibration et un modèle d'erreur (f(α)), les paramètres de calibration étant les coefficients d'une fonction mathématique du modèle d'erreur, le modèle d'erreur décrivant une erreur dépendant de l'angle de rayonnement déterminé par l'unité de capteur de l'angle de rayonnement, et l'erreur dépendant de l'angle ayant une cause d'erreur spécifique au dispositif,
et
une unité d'évaluation (17) configurée pour déterminer l'angle (ϕ) en fonction des angles de rayonnement (α₁, α₂) déterminés du faisceau lumineux (92) rayonné par le rotor directionnel (3), des paramètres de calibration stockés et du modèle d'erreur (f(α)) stocké.

2. Dispositif selon la revendication 1,
**caractérisé en ce que**
le rotor directeur (3) forme une surface de réflexion plane (8) pour le faisceau lumineux (91) généré par l'émetteur (10).

3. Dispositif selon la revendication 1 ou 2,
**caractérisé en ce que**
l'émetteur (10) comprend une diode de contrôle (29) et que la diode de contrôle (29) forme le récepteur (11).

4. Dispositif selon l'une des revendications 1 à 3,
**caractérisé par**
une minuterie (21) configurée pour délivrer un signal temporel cadencé à l'unité de capteur d'angle de rayonnement (18).

5. Dispositif selon l'une des revendications 1 à 4,
**caractérisé par**
un générateur de signal de référence (20) configuré pour fournir un signal de référence à l'unité de capteur d'angle de rayonnement (18) lorsque le faisceau lumineux rayonné (92) est émis par le rotor directionnel (3) dans une direction de référence.

6. Dispositif selon l'une des revendications 1 à 5,
**caractérisé par**
une unité de correction des angles de rayonnement (22) pour déterminer des angles de rayonnement corrigés (α_{korr,1}, α_{korr,2}) du faisceau lumineux (92) rayonné par le rotor directeur (3) en corrigeant les angles de rayonnement déterminés (α₁, α₂) du faisceau lumineux (92) rayonnés par le rotor directeur (3) à l'aide du modèle d'erreur (f(α)) et des paramètres de calibration,
dans lequel l'unité d'évaluation (17) est configurée pour déterminer l'angle (ϕ) en fonction des angles de rayonnement corrigés (α_{korr,1}, α_{korr,2}).

7. Dispositif selon l'une des revendications 1 à 6,
**caractérisé en ce que**
le modèle d'erreur (f(α)) est un modèle d'erreur sinusoïdal.

8. Dispositif selon l'une des revendications 1 à 7,
**caractérisé en ce que**
le modèle d'erreur (f(α)) comprend une combinaison linéaire de fonctions orthogonales d'un angle de rayonnement du faisceau lumineux (92) rayonné par le rotor directeur (3), et les paramètres de calibration comprennent des coefficients de la combinaison linéaire.

9. Dispositif selon la revendication 8,
**caractérisé en ce que**
les fonctions orthogonales comprennent une fonction sinus et une fonction cosinus d'un multiple entier respectif et/ou d'une fraction entière respective de l'angle du faisceau lumineux (92) rayonné par le rotor directeur (3).

10. Dispositif selon l'une des revendications 1 à 9,
**caractérisé en ce que**
l'unité de calibrage (15) est configurée, lors d'une opération de calibrage dans laquelle l'axe de rotation (4) du rotor directeur (3) est parallèle à un axe de sommet (5) d'un angle ((ϕ_{ref}) entre deux surfaces planes (32, 33) d'une pièce d'angle de calibration (31), et au moins un dispositif comprenant l'émetteur (10), le rotor directeur (3) et le récepteur (11) est pivoté autour de l'axe de rotation (4) du rotor directeur (3) entre plusieurs positions de pivotement (-β, 0°, +β) et à chacune des positions de pivotement (-β, 0°, +β) de la pièce d'angle de calibration (31) l'angle (ϕ_{ref}) entre les surfaces planes (32, 33) est déterminé, pour déterminer les paramètres de calibration de telle sorte qu'un écart des déterminations de l'angle (ϕ_{ref}) entre les surfaces planes (32, 33) de la pièce d'angle de calibration (31) aux positions de pivot respectives (-β, 0°, +β) l'une par rapport à l'autre soit réduit ou minimisé, et pour stocker des paramètres de calibration déterminés dans l'unité de mémoire (16).

11. Dispositif selon la revendication 10,
**caractérisé en ce que**
les plusieurs positions de pivot (-β, 0°, +β) comprennent une position extrême (-β, +β) et une position médiane (0°) d'une plage de pivots et la plage de pivots comprend au moins 30°.

12. Dispositif selon la revendication 10 ou 11,
**caractérisé en ce que**
l'unité de calibrage (15) est adaptée pour déterminer en outre le modèle d'erreur (f(α)) pendant le processus de calibrage de telle sorte que l'écart des déterminations de l'angle (ϕ_{ref}) entre les surfaces planes (31, 32) de la pièce d'angle de calibrage (31) aux positions de pivot respectives (-β, 0°, +β) les unes par rapport aux autres soit réduit ou minimisé, et pour stocker le modèle d'erreur déterminé (f(α)) dans l'unité de mémoire (16).

13. Dispositif selon l'une des revendications 10 à 12,
caractérisé en que
l'unité de calibration (15) est configurée pour déterminer les paramètres de calibration par un procédé numérique itératif.

14. Dispositif selon l'une des revendications 1 à 13,
**caractérisé par**
un élément de commande (34) configuré pour signaler à l'unité de calibration (15) d'effectuer la procédure de calibration lorsqu'un opérateur actionne l'élément de commande (34).

15. Dispositif selon l'une des revendications 1 à 14,
**caractérisé par**
une unité d'interface utilisateur (23, 34) adaptée pour permettre à un opérateur de sélectionner manuellement le modèle d'erreur (f(α)) et/ou de régler manuellement les paramètres de calibration.

16. Dispositif selon l'une des revendications 1 à 15,
**caractérisé en ce que**
le dispositif est conçu comme un appareil de mesure d'angle manuel (200) avec une unité d'affichage (23) pour afficher l'angle (ϕ).

17. Procédé pour déterminer un angle (ϕ) entre deux surfaces de pièces (1, 2) comprenant :
la génération (S21) d'un faisceau lumineux (91) au moyen d'un émetteur (10),
le rayonnement (S22) du faisceau lumineux généré (91) au moyen d'un rotor directeur (3) en rotation continue dans une direction de rayonnement rotatif perpendiculaire à un axe de rotation (4) du rotor directeur (3) sous la forme d'un faisceau lumineux rayonné (92),
la réception (S23) d'un faisceau lumineux réfléchi (93) au moyen d'un récepteur (11) lorsque l'axe de rotation (4) du rotor directeur (3) est disposé parallèlement à un axe de sommet (5) de l'angle (ϕ) et que le faisceau lumineux rayonné (92) est réfléchi par l'une des deux surfaces de la pièce (1, 2) antiparallèlement à la direction de rayonnement sous forme de faisceau lumineux réfléchi (93),
la détermination (S24) des angles de rayonnement respectifs (α₁, α₂) du faisceau lumineux émis par le rotor directeur (3) sur lequel le récepteur (11) reçoit le faisceau lumineux réfléchi (93),
**caractérisé par**
la détermination (S10) au moins des paramètres de calibration,
le stockage (S16) des paramètres de calibration et d'un modèle d'erreur (f(α)), les paramètres de calibration étant les coefficients d'une fonction mathématique du modèle d'erreur, le modèle d'erreur décrivant une erreur dépendant de l'angle de rayonnement déterminé par l'unité d'émission de l'angle de rayonnement, et l'erreur dépendant de l'angle ayant une cause d'erreur spécifique au dispositif,
et
la détermination (S25) de l'angle (ϕ) en fonction des angles de rayonnement (α₁, α₂) déterminés du faisceau lumineux (92) rayonné par le rotor directeur (3), des paramètres de calibration stockés et du modèle d'erreur stocké (f(α)).

18. Procédé selon la revendication 17,
**caractérisé par**
le fournissement (S11) d'une pièce d'angle de calibration (31) ayant deux surfaces planes (31, 32) renfermant un angle (ϕ_{ref}),
la disposition (S12) de l'axe de rotation (4) du rotor directeur (3) axialement parallèle à l'axe de sommet (5) de l'angle ((ϕ_{ref}) entre les surfaces planes (1, 2) de la pièce d'angle de calibration (31),
le pivotement (S13) d'un dispositif comprenant au moins l'émetteur (10), le rotor directeur (3) et le récepteur (11) autour de l'axe de rotation (4) du rotor directeur (3) entre plusieurs positions de pivotement (-β, 0°, +β),
la détermination (S14) de l'angle ((ϕ_{ref}) entre les surfaces planes (31, 32) de la pièce d'angle de calibration (31) à chacune des positions de pivot (-β, 0°, +β), et
la détermination (S15) des paramètres de calibrage et/ou du modèle d'erreur (f(α)) de telle sorte qu'un écart des déterminations de l'angle (ϕ_{ref}) entre les surfaces planes (31, 32) de la pièce d'angle de calibration (31) aux positions de pivot respectives (-β, 0°, +β) les unes par rapport aux autres soit réduit ou minimisé.
